# EUROPÄISCHE PATENTSCHRIFT

(11) **EP 3 406 929 B1**
(45) Veröffentlichungstag und Bekanntmachung des Hinweises auf die Patenterteilung: **05.06.2024**
(21) Anmeldenummer: 18178629.4
(22) Anmeldetag: 14.06.2016
(51) Int. Cl.: F16D 65/095, F16D 65/092, F16D 65/00, F16D 55/224, F16D 55/00

(54) **SCHEIBENBREMSE FÜR EIN NUTZFAHRZEUG**
DISC BRAKE FOR A COMMERCIAL VEHICLE
FREIN À DISQUE POUR UN VÉHICULE UTILITAIRE

(30) Priorität: 15.06.2015 DE 102015109540; 09.10.2015 DE 102015117285; 17.03.2016 DE 102016104970
(43) Veröffentlichungstag der Anmeldung: 28.11.2018
(62) Teilanmeldung aus: 16728956.0
(73) Patentinhaber: KNORR-BREMSE Systeme für Nutzfahrzeuge GmbH, 80809 München (DE)
(72) Erfinder: FRICKE, Jens, 94474 Vilshofen (DE); RGUICHI, Abdelaziz, Olching 82140 (DE); EICHLER, Thomas, 80809 München (DE); KRAUSE, Oliver, 82515 Wolfratshausen (DE); KLINGNER, Matthias, 82272 Moorenweis (DE); PESCHEL, Michael, 82296 Schöngeising (DE); SCHÖFBERGER, Tobias, 84048 Mainburg (DE); ADAMCZYK, Philipp, 87677 Stöttwang (DE); SCHÖNAUER, Manfred, 80995 München (DE); PLEINTINGER, Martin, 94428 Eichendorf (DE); MOLNAR, Markus, 94081 Fürstenzell (DE); GASSLBAUER, Franz, 84381 Johanniskirchen (DE); TROPP, Martin, 84364 Bad Birnbach (DE)
(74) Vertreter: Specht, Peter

(56) Entgegenhaltungen:
- EP-A1- 2 557 330
- DE-A1- 4 430 956
- JP-A- H09 210 104
- JP-A- S57 179 435
- JP-A- 2012 189 188
- US-A- 4 491 204
- US-A1- 2013 256 068

## Beschreibung

Die Erfindung betrifft eine Scheibenbremse für ein Nutzfahrzeug nach dem Oberbegriff des Anspruchs 1.

Bei einer gattungsgemäßen, auch als Schiebesattel-Bremse bekannten Scheibenbremse wird im Fall einer Bremsung mittels einer Zuspanneinrichtung, die pneumatisch oder elektromotorisch betätigbar ist, ein aktionsseitiger Bremsbelag gegen eine fahrzeugseitige Bremsscheibe gepresst. Im weiteren Verlauf des Bremsvorgangs wird der Bremssattel, bezogen auf die Bremsscheibe, entgegen der Zuspannrichtung des aktionsseitigen Bremsbelages verschoben unter Mitnahme und Anpressen des gegenüberliegenden, reaktionsseitigen Bremsbelages an die andere Seite der Bremsscheibe.

Nach einem Lösen der Bremse verbleibt bei der bekannten Scheibenbremse der Bremssattel in dieser Position, in der die Bremsbeläge, zumindest aber der reaktionsseitige Bremsbelag zwar drucklos, jedoch schleifend an der Bremsscheibe anliegt. Die dadurch im Fahrbetrieb auftretenden Restschleifmomente der Bremsbeläge wirken sich insofern nachteilig aus als sie zu einem erhöhten Kraftstoffverbrauch führen ebenso wie zu einer Verringerung der Standzeit der beteiligten Bauteile, nämlich der Bremsscheibe und der Bremsbeläge.

Zwar erfolgt ein geringes Lösen der Bremsbeläge im Fahrbetrieb beispielsweise durch einen Taumelschlag der Bremsscheibe sowie durch Erschütterungen und Querbeschleunigungen bei Kurvenfahrten. Diese Effekte sind jedoch nicht ausreichend, um die genannten Restschleifmomente wirksam zu verhindern. Um diesem Problem zu begegnen, ist in der DE 10 2007 001 213 eine Scheibenbremse offenbart, mit einer Rückstelleinrichtung, die in einem der Führungsholme, über die der Bremssattel verschiebbar am Bremsträger gehalten ist, angeordnet ist und die ein federndes Rückstellelement aufweist, durch das der Bremssattel in eine Ausgangsstellung verschoben wird.

Die EP 2 557 330 A1 offenbart eine Scheibenbremse nach dem Oberbegriff des Anspruchs 1.

Prinzipiell haben sich diese Konstruktionen bewährt. Jedoch kann der Einsatz dieser bekannten Rückstelleinrichtung bei druckluftbetätigten Scheibenbremsen schwerer Nutzfahrzeuge zu Problemen führen, da hier weite Grenzen variabler Einflüsse durch Bauteiltoleranzen und Bauteildeformationen wirksam sind, die eine sichere Funktion dieser Rückstelleinrichtung nicht in jedem Fall zulassen.

Vergleichbare Probleme ergeben sich bei einer Scheibenbremse wie sie in der DE 10 2012 006 111 A1 thematisiert ist. Dabei ist eine Rückstelleinrichtung auf der der Zuspanneinrichtung gegenüberliegenden, dem reaktionsseitigen Bremsbelag zugewandten Seite angeordnet, wodurch eine wirksame, insbesondere automatische Rückstellung des Bremssattels erreicht wird, bei gleichzeitig minimalstem Eingriff in die Systemsteifigkeit.

In jedem Fall wirkt die Rückstelleinrichtung auf den Bremssattel, wobei der Bremsträger als Widerlager fungiert.

Die DE 43 01 621 A1 beschreibt eine Schwimmsattel-Scheibenbremse mit einem ortsfesten Bremsträger, der zwei über den äußeren Rand einer Bremsscheibe ragende Trägerarme aufweist, mit beiderseits der Bremsscheibe angeordneten, je einen Reibbelag und eine Rückenplatte aufweisenden Bremsbacken, die an den Trägerarmen verschiebbar abgestützt sind, mit einem am Bremsträger axial verschiebbar geführten Schwimmsattel, der die Bremsbacken umgreift und einen zum Andruck der Bremsbacken an die Bremsscheibe bestimmte Betätigungsvorrichtung aufweist, mit einer auf die Bremsbacken axial in Bremslöserichtung einwirkenden Federanordnung, die nach dem Bremsen das Einstellen eines Lüftspiels zwischen Bremsbacken und Bremsscheibe unterstützt. Die Federanordnung weist zumindest eine Spreizfeder auf, die an einem Trägerarm des Bremsträgers in axialer Richtung insgesamt unverschiebbar befestigt ist, dass die Befestigung an einem über dem äußeren Rand der Bremsscheibe befindlichen Abschnitt des Trägerarms erfolgt, und dass die Spreizfeder zumindest zwei Federarme aufweist, die an den Rückplatten der Bremsbacken in axialer Richtung federnd anliegen.

Die US2014/0339026 A1 beschreibt eine Spreizfeder, umfassend einen Verriegelungsarm, der die Spreizfeder mit einem Bremskomponente verbindet, einen Rückzugarm; und eine Vorspanneinrichtung, die zwischen dem Verriegelungsarm und dem Rückholarm angeordnet ist, wobei die Vorspannvorrichtung sechs spiralförmige Schleifen oder mehr umfasst, die Energie während einer Bremsenaktivierung speichern und sobald der Bremsvorgang abgeschlossen ist, die Bremskomponenten (Bremsbelag) zurückziehen. Es wird ein Bremssattel in Form eines Faustsattels, welcher kein Schiebesattel ist, angegeben. Dieser ist für ein Personenfahrzeug geeignet, jedoch nicht für ein Nutzfahrzeug.

Weitere Scheibenbremsen mit Rückstelleinrichtungen offenbaren die US 4 491 204 A1, die US 2013/256 068 A1, die JP H09 210 104A und die JP 2012 189 188A.

Der Erfindung liegt die Aufgabe zugrunde, eine Scheibenbremse der gattungsgemäßen Art so weiterzuentwickeln, dass mit konstruktiv einfachsten Mitteln die Standzeit insbesondere der Bremsbeläge und der Bremsscheibe erhöht und die Betriebskosten insgesamt gesenkt werden.

Diese Aufgabe wird durch eine Scheibenbremse mit den Merkmalen des Anspruchs 1 gelöst.

Mittels des Haltebogens, an dem die Spreizeinrichtung mit ihren Federarmen befestigt ist, erfolgt eine automatische Zentrierung des Bremssattels nach einem Lösen der Bremse, also nach Beenden eines Bremsvorgangs, wobei durch die insoweit fixierte Positionierung der Spreizeinrichtung die Bremsbeläge derart zurückgestellt werden, dass sich der Bremssattel gegenüber der Bremsscheibe zentriert.

Der Angriff der Spreizeinrichtung an den beiden Bremsbelägen erfolgt zweckmäßigerweise an den Belagträgerplatten und zwar auf der dem daran befestigten Reibbelag zugewandten Seite oder an der gegenüberliegenden Rückenseite. Um ein Verkanten des jeweiligen Bremsbelages bei der Rückstellung zu vermeiden, greift das Spreizelement entweder zentral, an einem oberen frei liegenden Randbereich der Belagträgerplatte an oder symmetrisch an zwei Anlagebereichen rechts und links.

In einer Ausführung erstrecken sich die Spreizelemente ausgehend von einem zentralen Bereich in der Mitte der Öffnung von innen nach außen zu den zur Mitte abständig zueinander angeordneten Anlagebereichen. Es ist auch möglich, dass sich die Spreizelemente ausgehend von einem zentralen Bereich in der Mitte der Öffnung von innen nach außen zu den gleichmäßig zur Mitte abständig zueinander angeordneten Anlagebereichen erstrecken.

Auf diese Weise ist die Spreizeinrichtung mittig im Bremssattel angeordnet, wobei sie ebenfalls innerhalb einer Hüllkurve einer Felge eines zugeordneten Rades angeordnet ist.

Es weist die Spreizeinrichtung Federarme auf, von denen jeweils zwei an einer zugeordneten Belagträgerplatte anliegen, wobei die Federarme in dem zentralen Bereich der Öffnung miteinander verbunden sind, was einen Einbau bei Montage und Wartung vereinfacht.

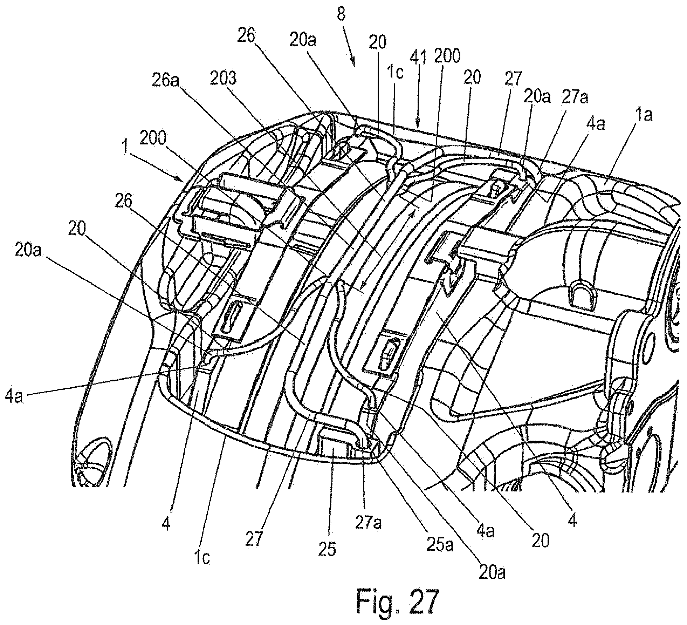

Ausführungsbeispiele werden nachfolgend anhand der beigefügten Zeichnungen beschrieben. Nur die Fig. 27 zeigt ein erfindungsgemäßes Ausführungsbeispiel.

Es zeigen:
- Figuren 1 und 2: jeweils einen Teilausschnitt einer Scheibenbremse in einer perspektivischen Draufsicht;
- Figur 1a: eine vergrößerte schematische Teilschnittdarstellung der Scheibenbremse nach Figur 1;
- Figuren 3-7: weitere Ausführungsbeispiele anhand einer Einzelheit der Scheibenbremse, jeweils gleichfalls in einer schaubildlichen Darstellung;
- Figuren 8-28: weitere Ausführungsbeispiele, jeweils als Einzelheit der Scheibenbremse in einer perspektivischen Ansicht.

Die Begriffe "oben", "unten", "links", "rechts" beziehen sich auf die jeweilige Anordnungen in den Figuren.

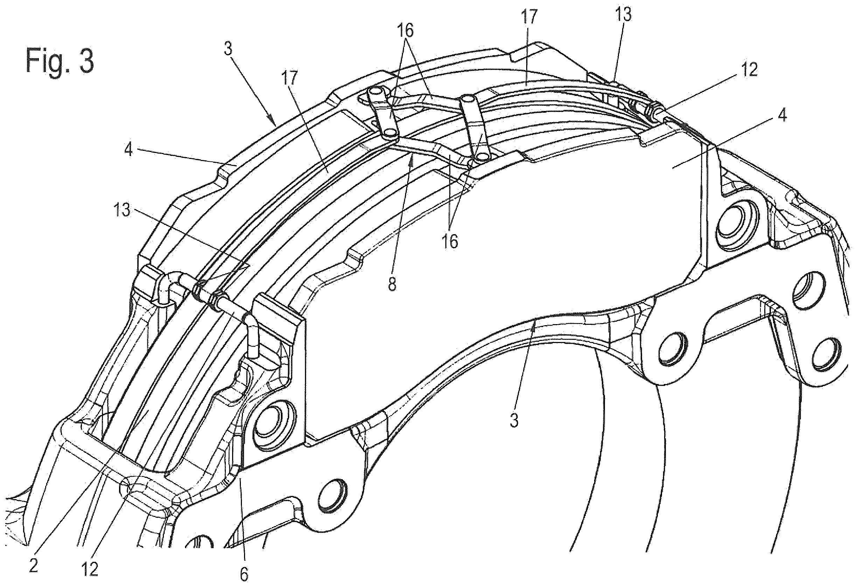

Eine "Oberseite" und eine "Unterseite" eines Bremsbelags 3 bzw. einer Belagträgerplatte 4 beziehen sich immer auf die Einbausituation des Bremsbelags 3. Dabei liegt die Unterseite des Bremsbelags 3 in radialer Richtung näher an einer Bremsscheibendrehachse 2a als die Oberseite dieses Bremsbelags 3, wie z.B. aus Figur 3 deutlich hervorgeht.

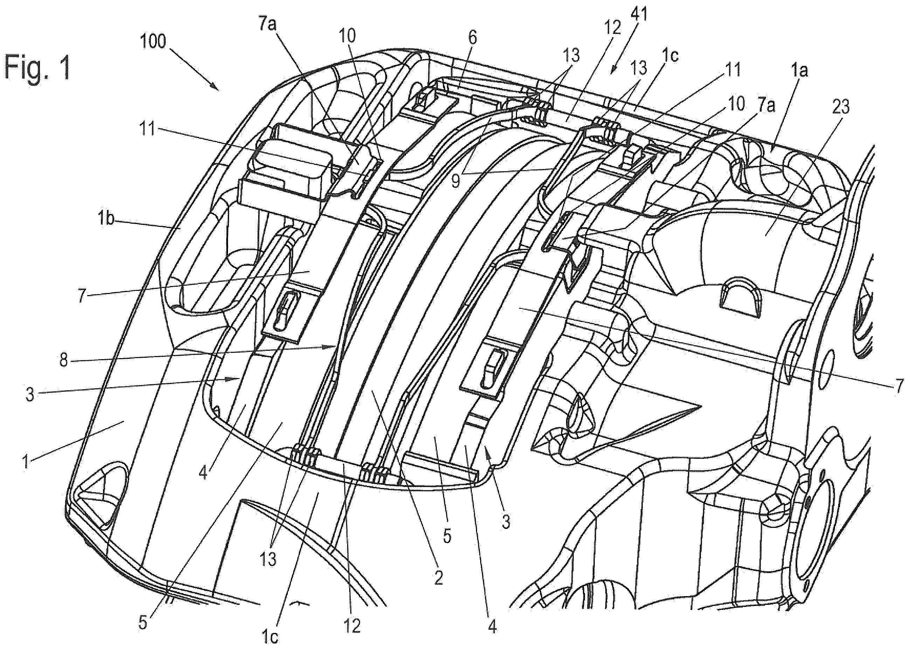

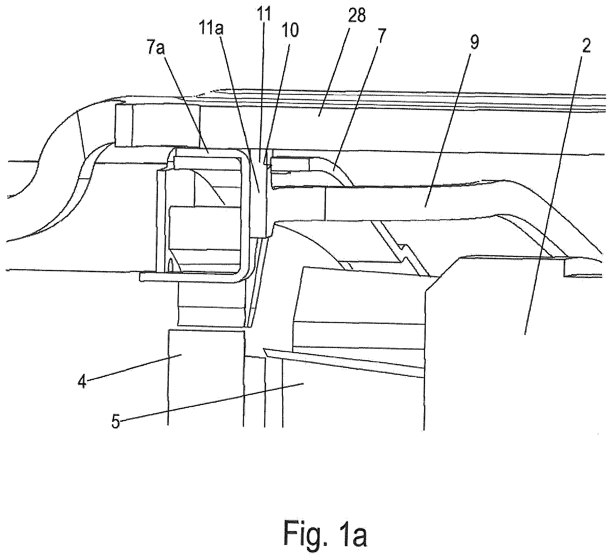

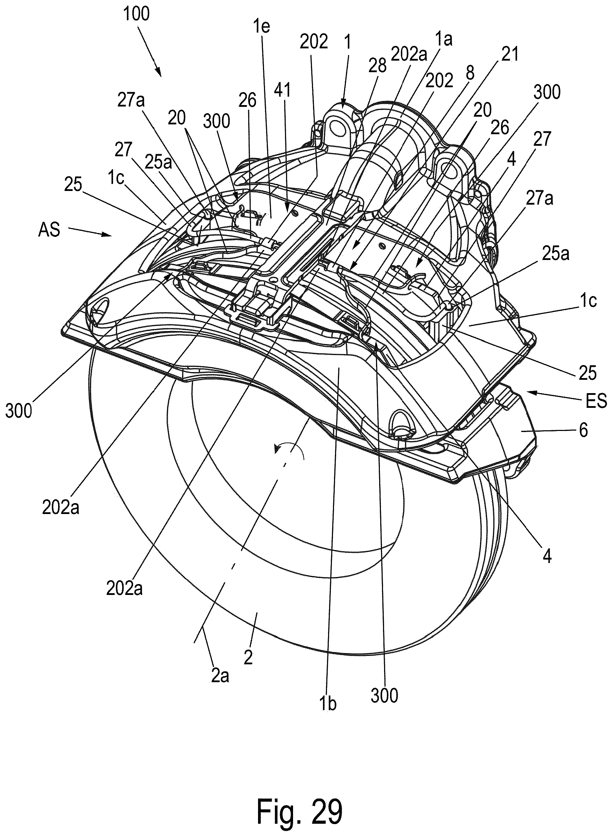

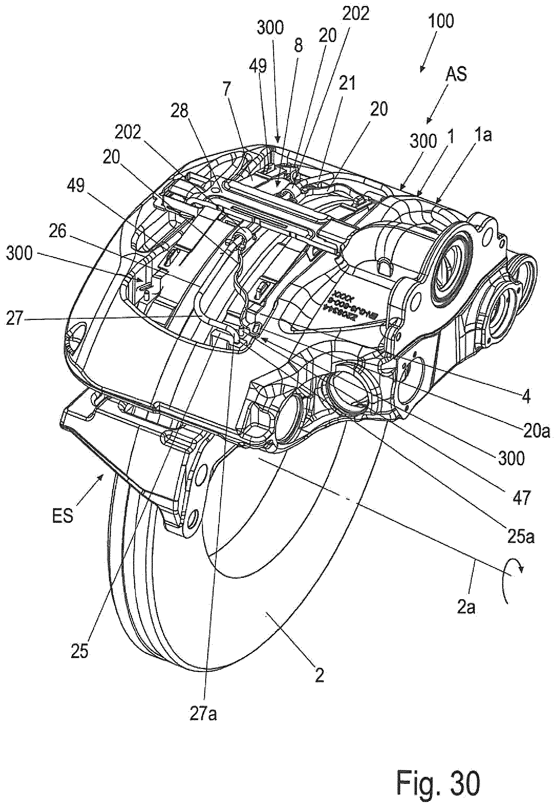

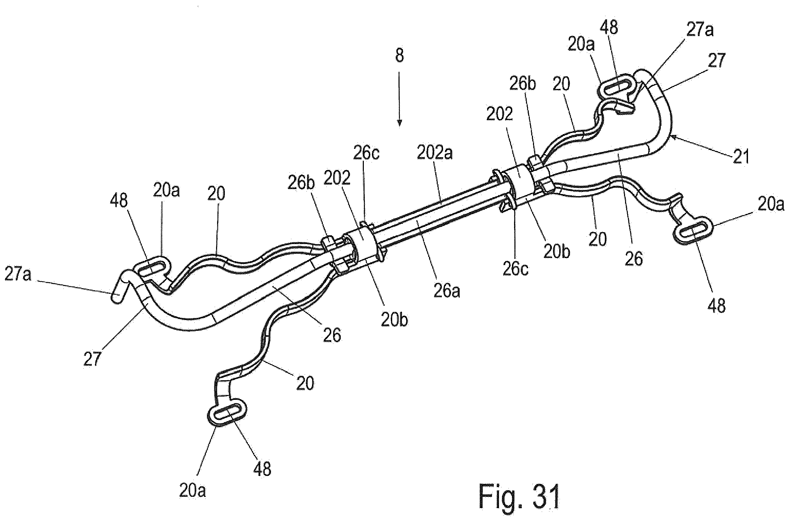

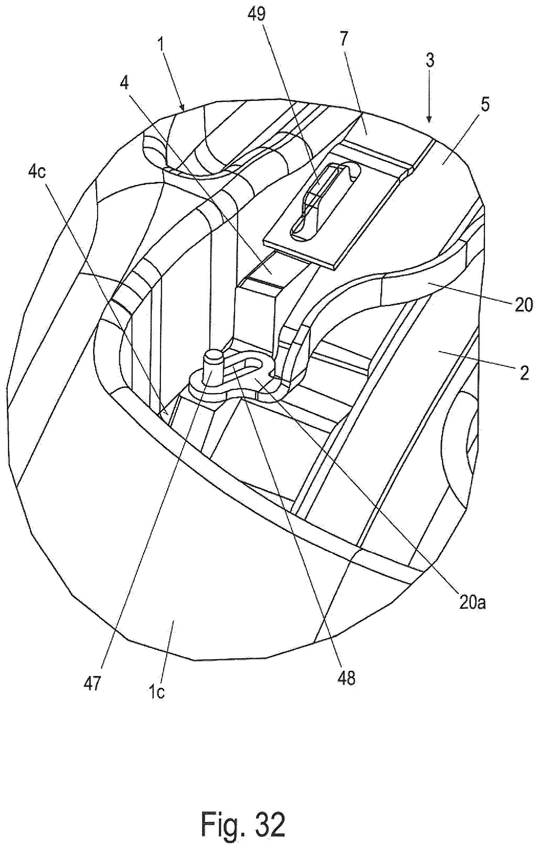

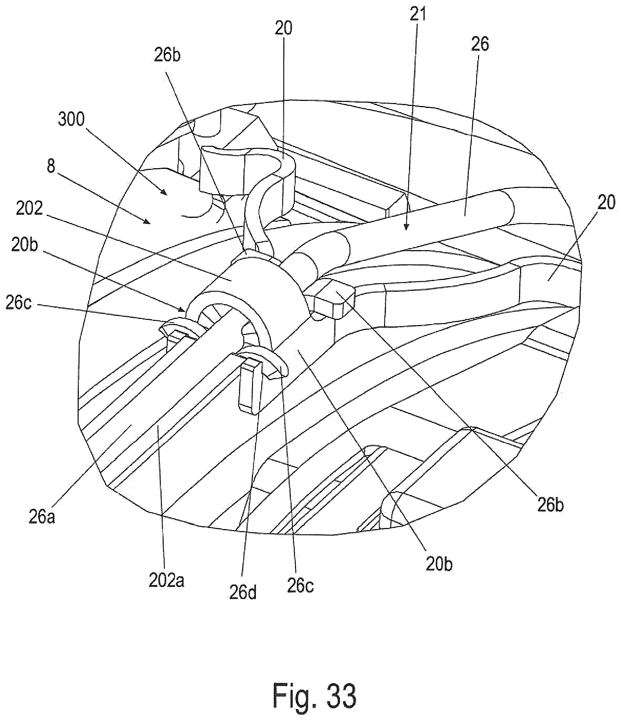

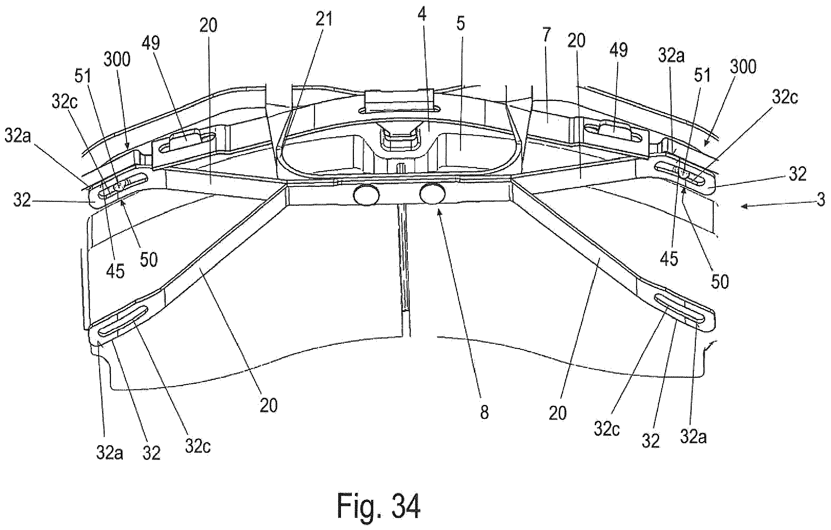

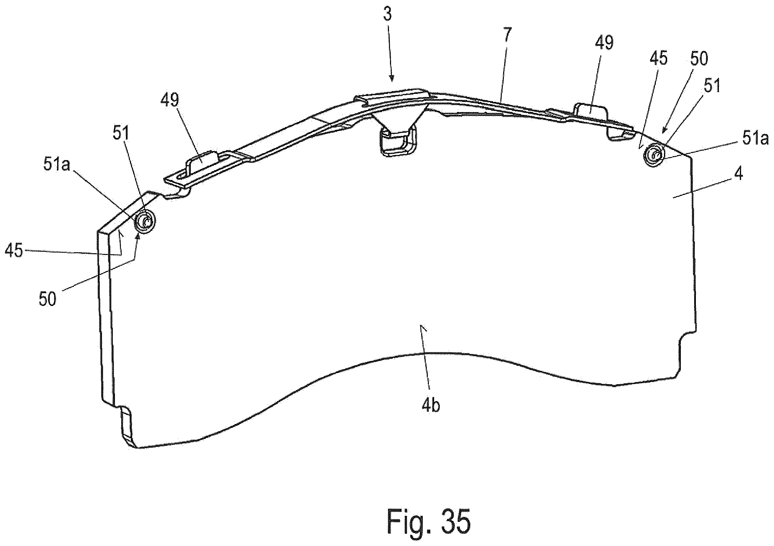

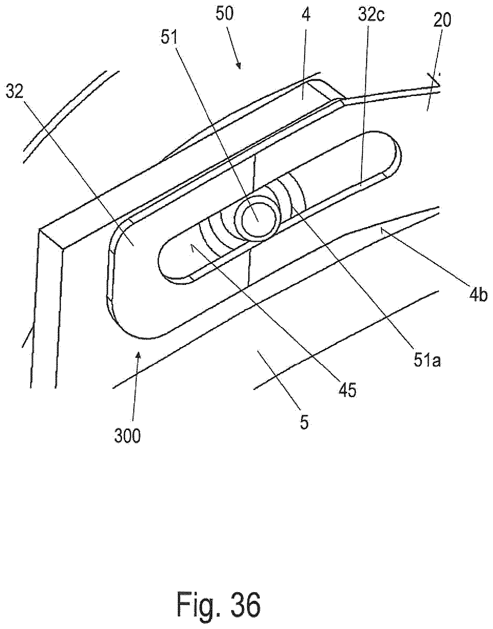

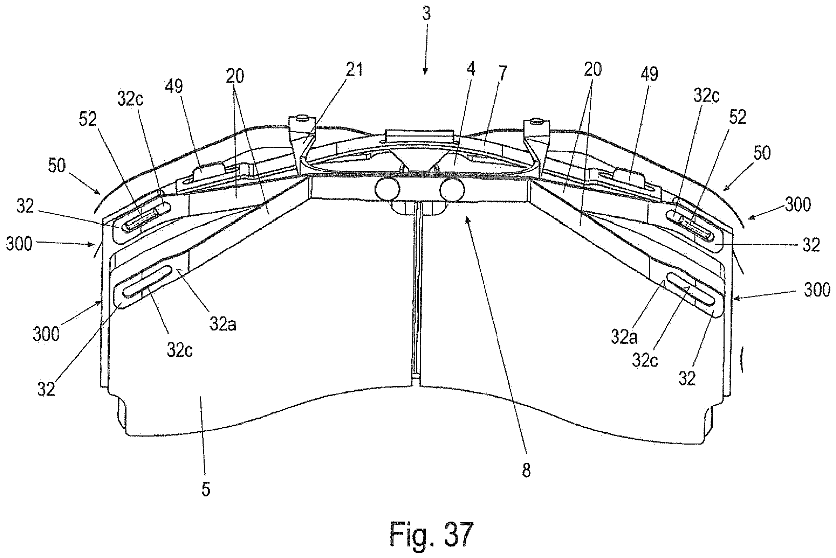

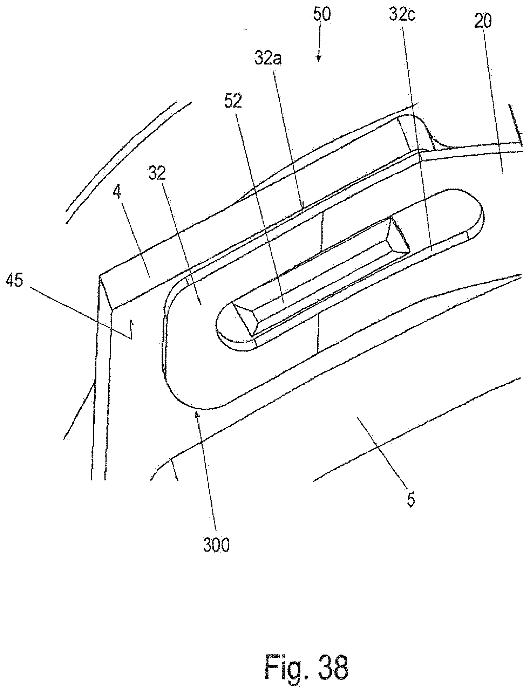

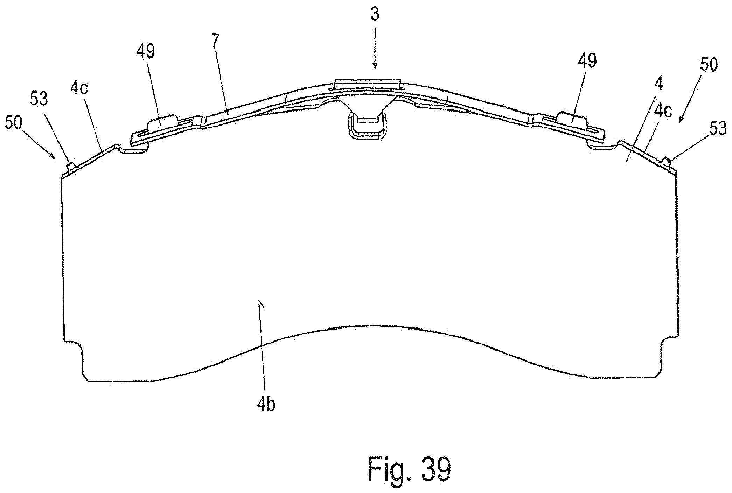

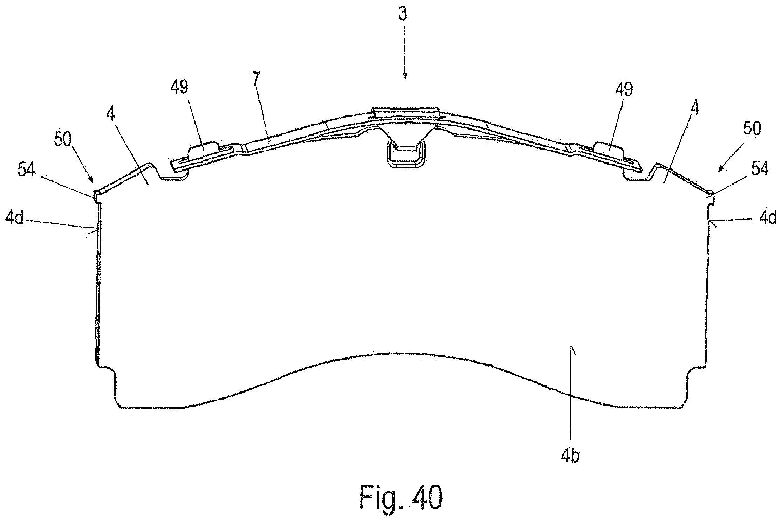

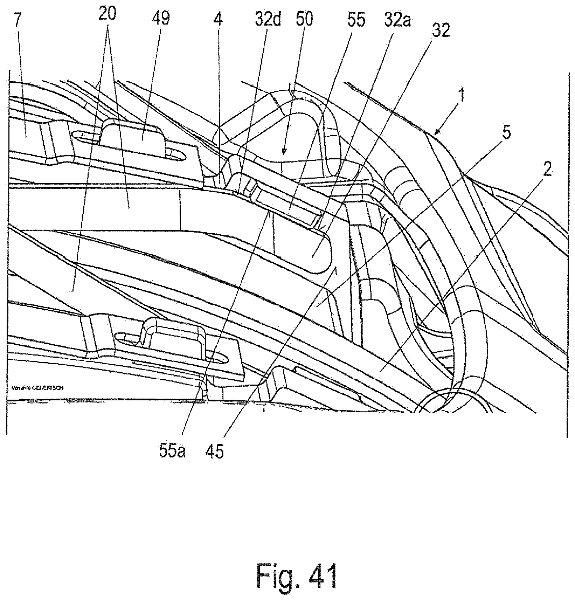

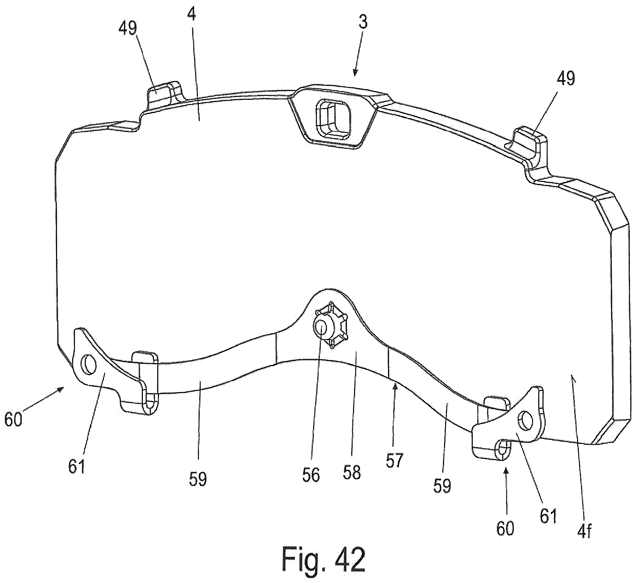

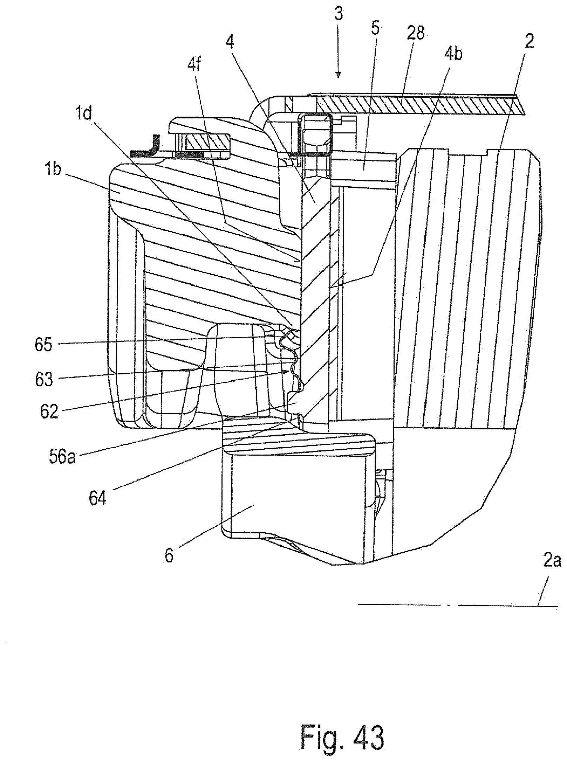

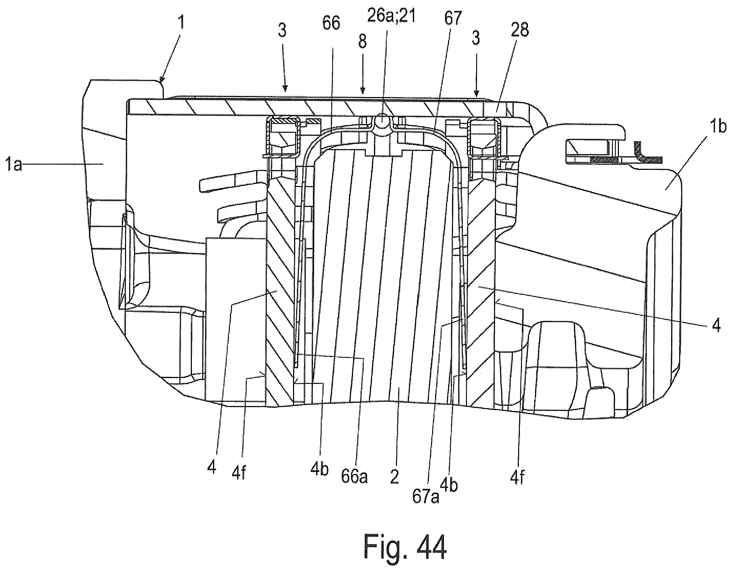

In der **Figur 1** ist ein Teil einer Scheibenbremse 100 für ein Nutzfahrzeug abgebildet, mit einem eine Bremsscheibe 2 übergreifenden Bremssattel 1. Die Bremsscheibe 2 weist eine Bremsscheibendrehachse 2a auf (siehe Figur 29). Der Bremssattel 1 ist bezogen auf die Bremsscheibe 2 axial in Richtung der Bremsscheibendrehachse 2a verschiebbar an einem Bremsträger 6 angeschlossen, wozu der Bremssattel 1 auf nicht dargestellten Führungsholmen gelagert ist, die mit dem ortsfest am Fahrzeug gehaltenen Bremsträger 6 verbunden sind.

Der Bremssattel 1 umfasst einen Zuspannabschnitt 1a, einen Sattelrücken 1b und zwei Zugstreben 1c. Der Zuspannabschnitt 1a verläuft mit einer Seite parallel zu der Ebene der Bremsscheibe 2 auf einer Seite der Bremsscheibe 2. Auf der anderen Seite der Bremsscheibe 2 ist, ebenfalls parallel zu der Bremsscheibe 2 verlaufend, der Sattelrücken 1b angeordnet. Der Sattelrücken 1b ist mit dem Zuspannabschnitt 1a an jeweils einem Ende mit jeweils einer Zugstrebe 1c verbunden. Die Zugstreben 1c verlaufen dabei im Wesentlichen rechtwinklig zum Zuspannabschnitt 1a und zum Sattelrücken 1b.

Der Zuspannabschnitt 1a weist einen Innenraum auf, in welchem eine nicht gezeigte Zuspanneinrichtung der Scheibenbremse 100 angeordnet ist. Eine Öffnung des Innenraums weist zur Bremsscheibe 2 und ist mit einer Platte, die als Bodenblech 1e bezeichnet wird, verschlossen (siehe Figur 29).

Der Zuspannabschnitt 1a, der Sattelrücken 1b und die Zugstreben 1c legen in dieser Anordnung eine zentrale Öffnung 41 zwischen sich fest, welche die Bremsscheibe 2 überspannt. Die Öffnung 41 weist eine gedachte Längsmittellinie auf, welche in der Ebene der Bremsscheibe 2 liegt und die gedachten Mitten der Zugstreben 1c verbindet. Außerdem weist die Öffnung 41 eine weitere gedachte Quermittellinie auf, welche eine gedachte Mitte des Zuspannabschnitts 1a eine gedachte Mitte des Sattelrückens 1b verbindet. Die Längsmittellinie und die Quermittellinie schneiden sich in einem gedachten Mittelpunkt, welcher hier als virtuelle Mitte der Öffnung 41 bezeichnet wird.

Im Bremsträger 6 sind Bremsbeläge 3 angeordnet, die im Fall einer Bremsung beidseitig an die Bremsscheibe 2 anpressbar sind. Dabei weist jeder Bremsbelag 3 eine Belagträgerplatte 4 und einen auf der der Bremsscheibe 2 zugewandten Seite daran befestigten Reibbelag 5 auf, der in Funktion, also bei einer Bremsung, gegen die Bremsscheibe 2 gepresst ist.

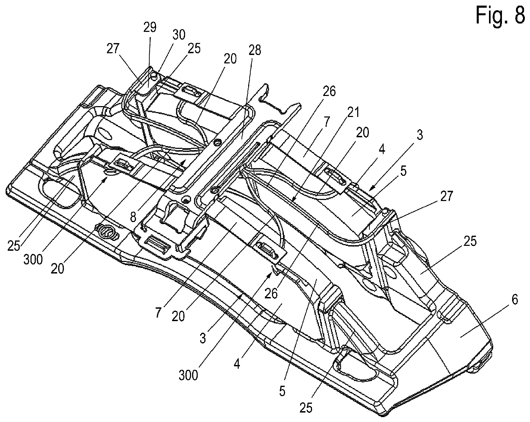

Die Bremsbeläge 3 sind durch die zentrale Öffnung 41 für einen Wechsel und zur Wartung erreichbar. Sie können durch diese zentrale Öffnung 41 in ihre zugehörigen Belagschächte eingesetzt und wieder daraus entnommen werden. Die Belagschächte sind jeweils seitlich durch Bremsträgerhörner 25 festgelegt (siehe Figur 8).

Die Bremsung erfolgt mittels der im Zuspannabschnitt 1a des Bremssattels 1 dort in einem Aufnahmeraum angeordneten Zuspanneinrichtung mit einem Bremshebel, der in einem Dom 23 des Bremssattels 1 positioniert ist. Der zugeordnete Bremsbelag 3, als aktionsseitiger oder auch zuspannseitiger Bremsbelag bezeichnet, kontaktiert zunächst bei einer Bremsung die Bremsscheibe 2. Im weiteren Verlauf wird mittels auftretender Reaktionskräfte der Bremssattel 1 entgegengesetzt verschoben, unter Mitnahme des reaktionsseitigen Bremsbelags 3, bis dieser gleichfalls an der Bremsscheibe 2 reibend zur Anlage kommt.

Nach einem Lösen der Bremse werden die beiden sich gegenüberliegenden Bremsbeläge 3 mittels einer Rückstelleinrichtung so weit von der Bremsscheibe 2 gelöst, dass diese gegenüber den Bremsbelägen 3 frei läuft.

Die Rückstelleinrichtung besteht aus mindestens einer Spreizeinrichtung 8, die an den sich gegenüberliegenden Bremsbelägen 4, gleich wirkend entgegen der Zuspannrichtung angreift.

Bei dem in der Figur 1 gezeigten Beispiel besteht die Spreizeinrichtung 8 aus zwei spiegelverkehrt ausgeformten, ansonsten jedoch identischen Bandfedern 9, die an einer Belaghaltefeder 7 der jeweiligen Belagträgerplatte 4 gehalten sind, wozu an jede Bandfeder 9 eine Lasche 11 angeformt ist, die formschlüssig in einen Schlitz 10 der Belaghaltefeder 7 eingreift.

Dazu ist in **Figur 1a** eine vergrößerte schematische Teilschnittdarstellung der Scheibenbremse 100 nach Figur 1 dargestellt. Der Schnitt verläuft durch eine in Bezug auf Figur 1 vertikale Ebene, die durch die Bremsscheibendrehachse 2a verläuft.

Der Teil der Bandfeder 9, welcher mit der Belagträgerplatte 4 in Kontakt steht, befindet sich in einem mittleren Abschnitt der Bandfeder 9 und wird hier als Druckabschnitt 11a bezeichnet. Der Druckabschnitt 11a ist nach oben durch die Lasche 11 verlängert. Der Druckabschnitt 11a liegt in diesem Beispiel an einem Klemmenelement 7a an, welches zur Halterung der Belagfeder 7 an der Belagträgerplatte 4 in deren mittleren oberen Bereich angebracht ist. Ein Abschnitt des Klemmenelementes 7a erstreckt sich durch den Schlitz 10 der Belaghaltefeder 7. Dieser Schlitz 10 ist somit schon vorhanden und kann für den formschlüssigen Eingriff der Lasche 11 der Bandfeder 9 verwendet werden.

Der Abschnitt des Klemmenelementes 7a, dessen Außenseite mit dem Druckabschnitt 11a der Bandfeder 9 in Kontakt steht, liegt mit seiner Innenseite an der Belagträgerplatte 4 an. Auf diese Weise wird die Druckkraft des Druckabschnitts 11a der Bandfeder 9 auf die Belagträgerplatte 4 übertragen. Diese Erläuterungen gelten natürlich auch für die andere Bandfeder 9.

Zudem ist in Figur 1a ein Belaghaltebügel 28 (siehe auch Figur 8) gezeigt, welcher über den Bremsbelägen 3 in Querrichtung der Öffnung 41 bzw. in Richtung der Bremsscheibendrehachse 1a zwischen dem Zuspannabschnitt 1a und dem Sattelrücken 1b angeordnet und an diesen befestigt ist. Der Belaghaltebügel 28 drückt hier mit Abschnitten seiner Unterseite auf die Klammerelemente 7a und somit auf die Belaghaltefedern 7, wodurch die Bremsbeläge 3 in ihren Belagschächten gehalten werden.

Endseitig ist die jeweilige Bandfeder 9 an einem Bügel 12 axial gesichert gehalten, der am Bremsträger 6 befestigt ist, wobei beide Bandfedern 9 abständig zueinander angeordnet sind. Zur axialen Sicherung sind auf dem Bügel 12, das jeweilige Ende der Bandfeder 9 zwischen sich einklemmend, Sicherungen 13 vorgesehen.

Bei einer Zuspannung der Bremsbeläge 3 werden die Bandfedern 9 unter Aufbau einer Federspannung entsprechend verformt, so dass nach einem Lösen der Bremsung die Bremsbeläge 3 durch die bereitstehende Federkraft aus ihrer Bremsstellung gleichmäßig herausgedrückt werden.

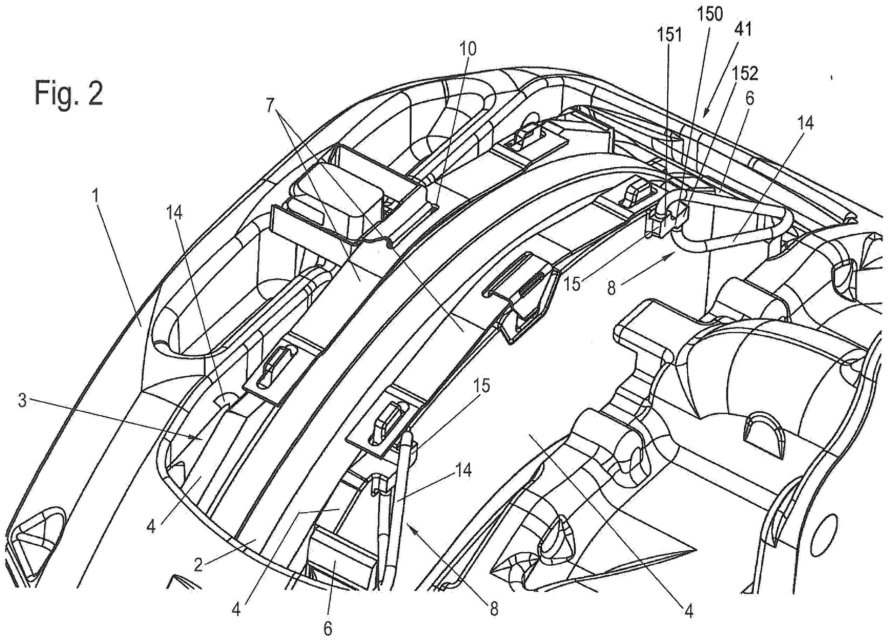

In der **Figur 2** ist ein weiteres Ausführungsbeispiel dargestellt bei dem die Spreizeinrichtung 8 jeweils aus einem Federbügel 14, vorzugsweise aus Federdraht geformt, gebildet ist. Dabei ist an jedem Endbereich der Belagträgerplatte 4 auf der den Belaghaltefedern 7 zugewandten Seite schwenkbar ein solcher Federbügel 14 fest gehalten, wozu an der Belagträgerplatte 4 eine Aufhängung 15 angeordnet ist, in die die Enden des Federbügels 14, radial zur Bremsscheibe 2 betrachtet, versetzt zueinander und verdrehbar gehalten sind.

In der Figur 2 umfasst die Aufhängung 15 für jedes Ende des Federbügels 14 einen rechteckigen Lagerabschnitt 151, 152, welche durch eine Verbindung 150 derart verbunden sind, dass der Lagerabschnitt 151 von der Verbindung 150 nach oben hervorsteht und der Lagerabschnitt 152 nach unten hervorsteht.

Die Aufhängung 15 kann z.B. einstückig mit der Belagträgerplatte 4 ausgebildet sein, beispielsweise durch mechanische Bearbeitung. Es ist auch möglich, dass die Aufhängung 15 an der Belagträgerplatte 4 befestigt ist.

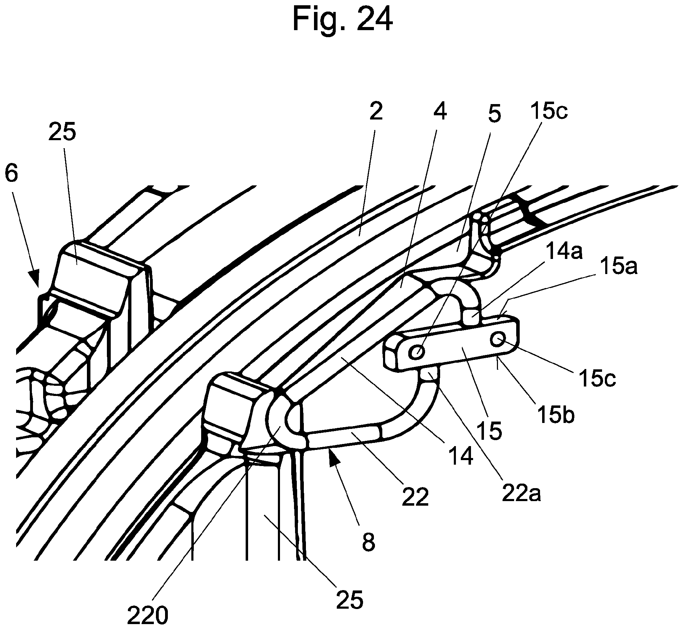

Die Aufhängung 15 kann auch z.B. eine rechteckige Platte sein, wie sie weiter unten (Figur 24) noch ausführlich beschrieben wird.

Ein Federbügel 14 liegt an jeweils einem zugeordneten Bremsträgerhorn des Bremsträgers 6 an und zwar auf der der Bremsscheibe 2 gegenüberliegenden Seite, so dass bei einem Zuspannen der Bremsbeläge 3 sich die Federbügel 14 unter Verspannung verformen. Bei einem Lösen der Bremse werden die Bremsbeläge 3 durch die Federkraft der Federbügel 14 entgegen ihrer Zuspannrichtung zurückgeschoben, vergleichbar dem Ausführungsbeispiel nach Figur 1.

In der **Figur 3** ist ein weiteres Ausführungsbeispiel der Spreizeinrichtung 8 dargestellt, wobei hier auf die Abbildung des Bremssattels verzichtet ist.

Diese Spreizeinrichtung 8 besteht aus zwei, jeweils an sich gegenüberliegenden Seiten des Bremsträgers 6 befestigten Bügeln 12 angeschlossenen Blattfedern 17, von denen jede an ihren einander zugewandten, freien Enden zwei Scherenglieder 16 trägt, von denen eines am aktionsseitigen Bremsbelag 3 und das andere am reaktionsseitigen Bremsbelag 3 schwenkbar befestigt ist.

Die zur Spreizung aufzubringende Federkraft wird bei dieser Ausführungsvariante durch die Blattfedern 17 erreicht, die sich beim Zuspannen der Bremsbeläge 3 radial nach außen wölben und beim Lösen der Bremse, entsprechend der Federwirkung, strecken, bei gleichzeitiger Streckung der angeschlossenen Scherenglieder 16 und Spreizung der Bremsbeläge 3 auseinander.

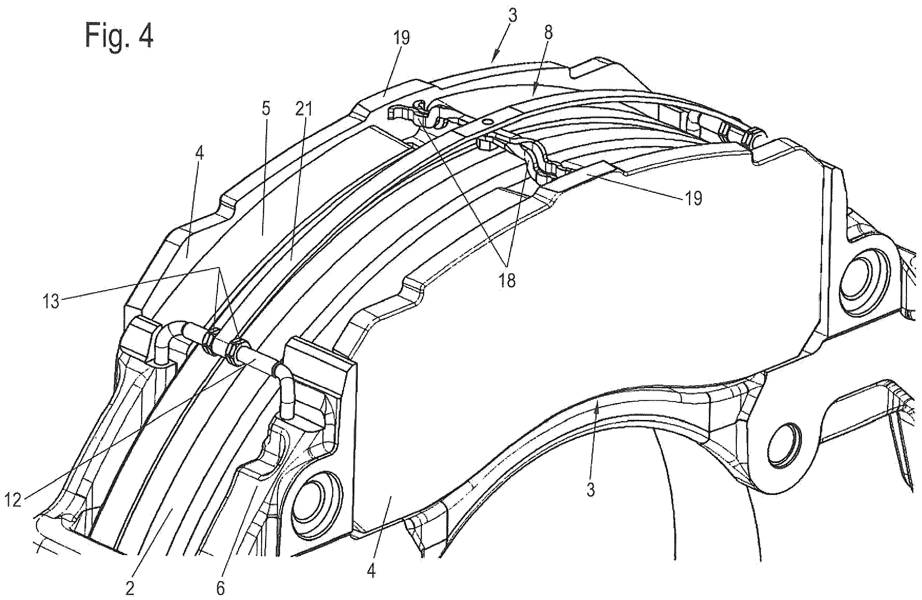

In der **Figur 4** ist eine weitere Variante der Spreizeinrichtung 8 dargestellt, die zwei gekreuzte Federschenkel 18 aufweist, die gelenkig an einem Haltebogen 21 befestigt sind. Dieser ist, vergleichbar der Befestigung der Blattfedern 17 am Bremsträger 6, ebenfalls an damit verbundenen Bügeln 12 gehalten, der die Bremsscheibe 2, bezogen auf deren Dicke, in einem Teilumfang mittig überspannt. Der Haltebogen ist nicht der Belaghaltebügel 28.

Die gebogenen Enden der gekreuzten Federschenkel 18 liegen jeweils an einer Anlage 19 der Belagträgerplatte 4 an, so dass sich diese scherenartige Konstruktion bei einem Zuspannen der Bremse, also bei einem axialen Aufeinanderzubewegen der Bremsbeläge 3 spreizen. Dabei sind die Federschenkel 18 am Haltebogen 21 befestigt, so dass die Federschenkel 18 beim Zuspannen der Bremsbeläge 3 vorgespannt werden und die Bremsbeläge 3 nach einem Lösen der Bremse durch diese Vorspannung voneinander gespreizt werden.

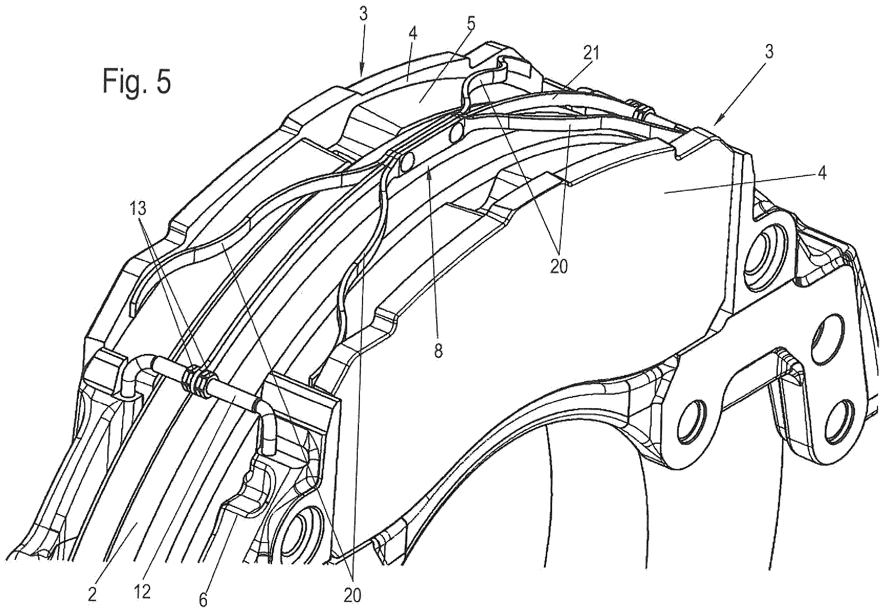

Die **Figur 5** gibt eine Spreizeinrichtung 8 wieder, die aus zwei identischen Federarmen 20 besteht, die im Mittenbereich miteinander in Längsrichtung der Öffnung 41 verbunden sind, ebenso wie mit einem Haltebogen 21, der über Bügel 12 am Bremsträger 6 befestigt ist.

Hierbei liegen die Federarme 20 an zwei sich gegenüberliegenden Endbereichen der Belagträgerplatte 4 an und zwar in einem oberseitig vorstehenden Randbereich. Die Enden der Federarme 20 sind gleichfalls gebogen, so dass ein Gleiten an der Belagträgerplattenfläche beim Zuspannen und Lösen der Bremse problemlos möglich ist. Auch hierbei wird durch die beim Zuspannen sich ergebende Vorspannung eine Spreizung der Bremsbeläge 3 nach einem Lösen der Bremse möglich.

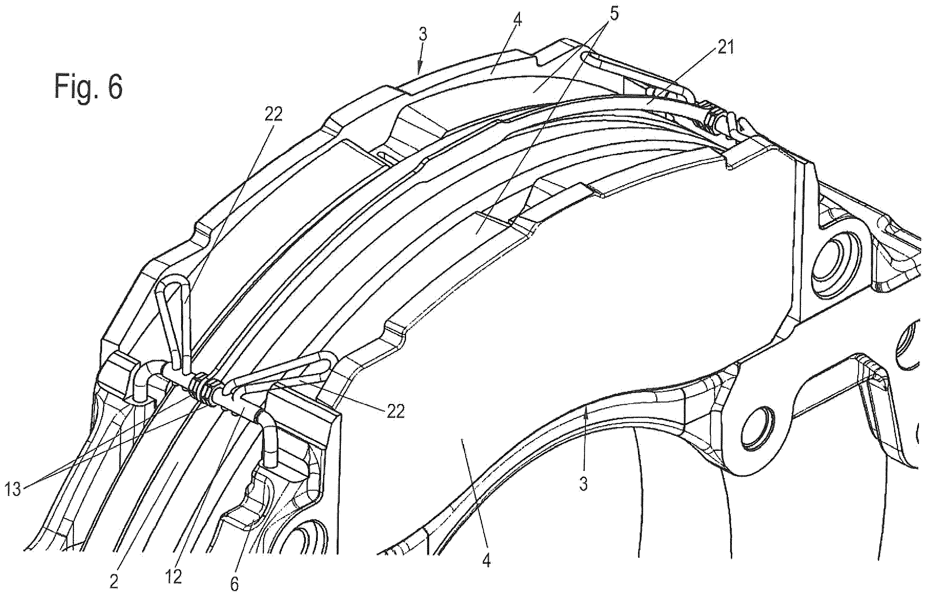

In der **Figur 6** besteht jede Spreizeinrichtung 8 aus einem drehbar mit dem Bügel 12 verbundenen Anlageschenkel 22, der schleifenförmig aus einem Federdraht gebildet ist und der gleichfalls, ebenso wie die Federarme 20 nach der Figur 5, am Randbereich der jeweils zugeordneten Belagträgerplatte 4 anliegt, wobei die beiden federnde Anlageschenkel 22 jeder Seite auf den einander zu gewandten Seiten der Belagträgerplatten 4 anliegen.

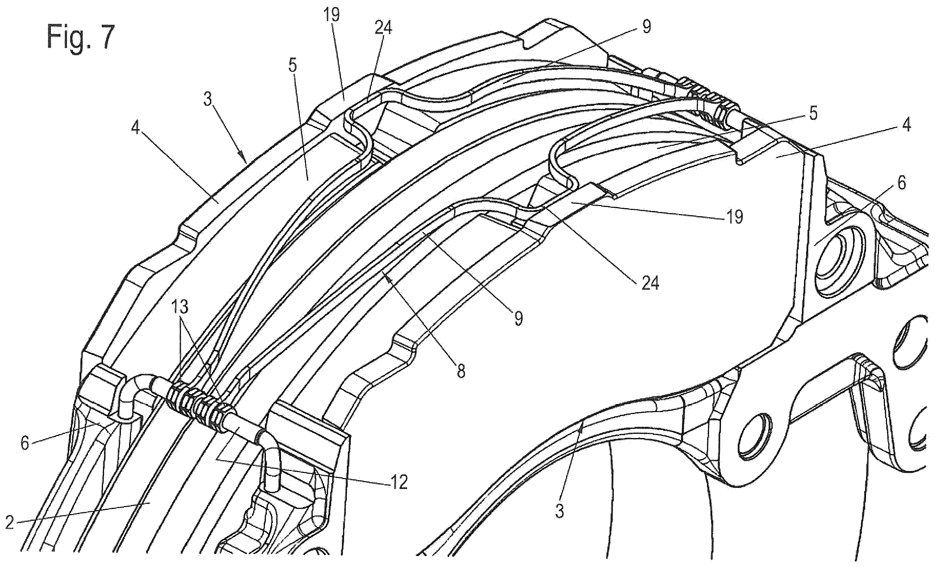

In der **Figur 7** schließlich ist eine weitere Variante dargestellt, die im Wesentlichen vergleichbar ist mit der Ausführung nach Figur 1. Auch hier greift die jeweils einem Bremsbelag 3 zugeordnete Bandfeder 9 zentral an der Belagträgerplatte 4 an, vorzugsweise an einer Anlage 19, wobei hierzu die Bandfeder 9 mit einem ausgestellten Anlagebügel 24 versehen ist.

Zur zentralen Einstellung beider Bandfedern 9, bezogen auf die Bremsscheibe 2, sind die Bandfedern 9 axial verschieblich an den beiden sich gegenüberliegenden Bügeln 12 befestigt.

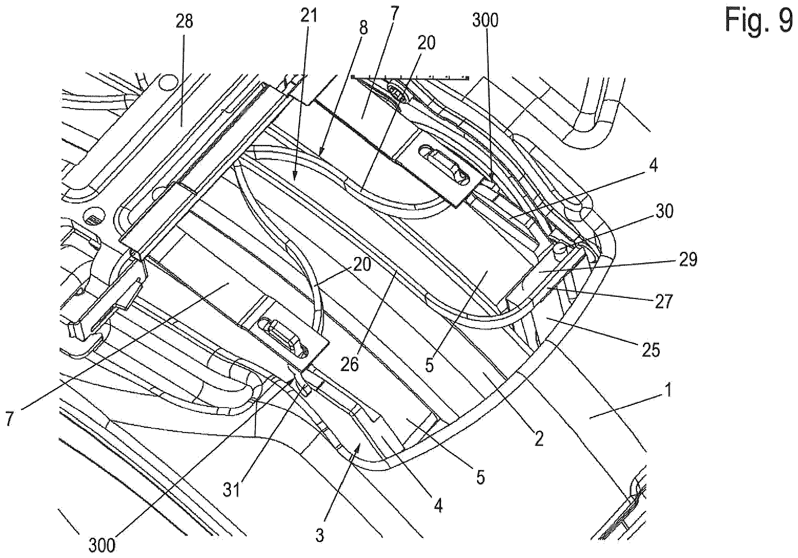

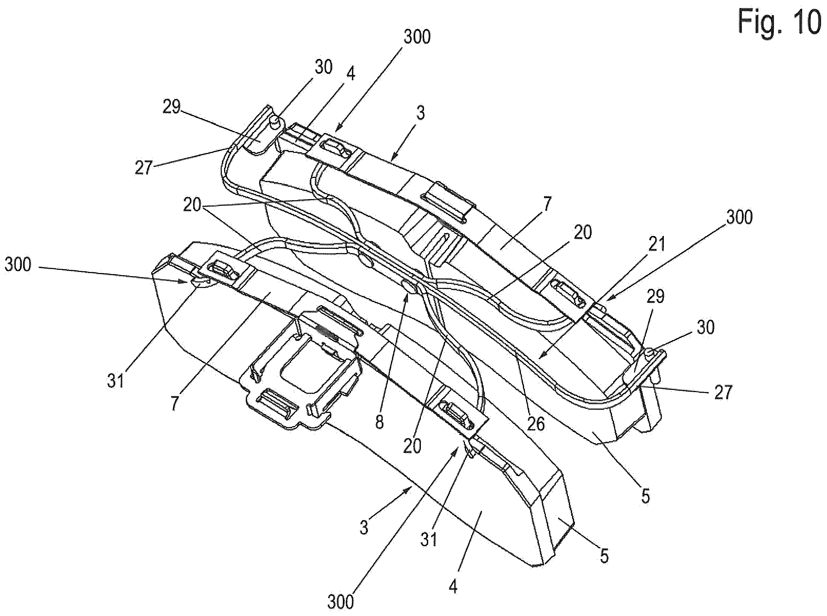

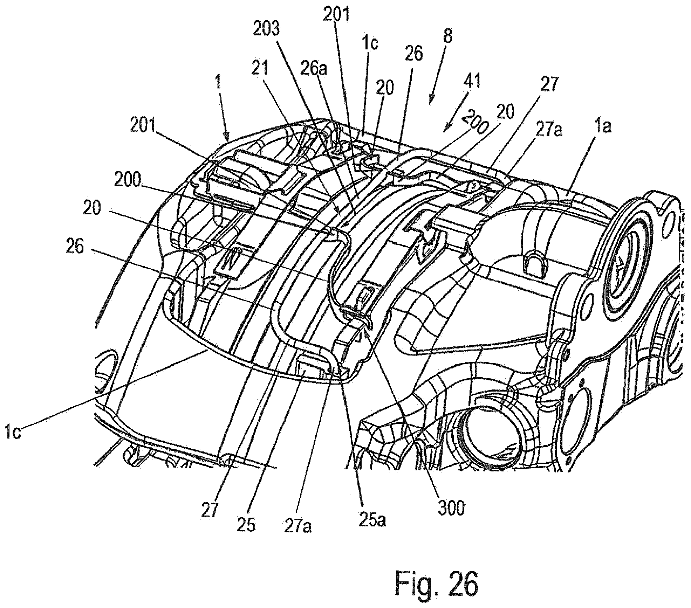

Bei dem in der **Figur 8** gezeigten Beispiel ist der Haltebogen 21 C-förmig gestaltet, mit einem sich, bezogen auf die Dicke der Bremsscheibe 2 mittig dazu angeordneten und sich in deren Umfangsrichtung erstreckenden Mittelschenkel 26, an den sich beidseitig jeweils ein abgewinkelter Endschenkel 27 anschließt. In der **Figur 9****,** die einen Teilausschnitt einer komplettierten Scheibenbremse 100 wiedergibt, während die Figur 8 lediglich den Bremsträger 6 mit den eingesetzten Bremsbelägen 3 zeigt, ist ebenso wie in der **Figur 10** deutlich zu erkennen, dass die Endschenkel 27 auf den einander zugewandten Seiten mit Laschen 29 versehen sind, an denen Zapfen 30 gehalten sind, die in Bohrungen 25a (siehe Figur 26) der Bremsträgerhörner 25 eingreifen.

Dabei bildet der Haltebogen 21 insofern eine Zentriereinrichtung für den Bremssattel 1, als der Bremsträger 6, an dem der Haltebogen 21 befestigt ist, ein ortsfestes Teil bildet, dem gegenüber der Bremssattel 1 verschieblich gelagert ist, so dass nach einem Lösen der Bremse und einem Spreizen der Spreizeinrichtung 8, d.h. einem Auseinanderdrücken der Bremsbeläge 3 der Bremssattel 1 in eine zentrierte Stellung geführt wird.

Die Figur 10 zeigt im Übrigen die Bremsbeläge 3 mit der Spreizeinrichtung 8 und dem Haltebogen 21 in Alleinstellung.

In den Figuren 8 und 9 ist weiterhin zu erkennen, dass ein am Bremssattel 1 gehaltener Belaghaltebügel 28 sich an den Belaghaltefedern 7 der Bremsbeläge 3 abstützt und den Haltebogen 21 niederhält und verspannt.

Wie der Figur 10 zu entnehmen ist, sind die Federarme 20 der Spreizeinrichtung 8 im Mittenbereich fest miteinander verbunden, entsprechend der Figur 5.

Weiterhin ist in den Figuren 9 und 10 erkennbar, dass die Federarme 20 jeweils an ihrem freien Ende Stützschenkel 31 aufweisen, die sich an der den Belaghaltefedern 7 zugeordneten Rändern der Belagträgerplatten 4 abstützen und durch die ein Lösen der Federarme 20 aus ihrer Anlage an der jeweiligen Belagträgerplatte 4 bei Rüttelbewegungen im Fahrbetrieb verhindert wird. Dabei sind die Stützschenkel 31 zwischen den Belaghaltefedern 7 und der zugeordneten Belagträgerplatte 4 verspannt, wobei die Belagträgerplatte 4 einen nicht dargestellten Ausschnitt aufweist, durch den der jeweilige Stützschenkel 31 geführt ist. Damit wird ein Kippen der Federarme 20 verhindert.

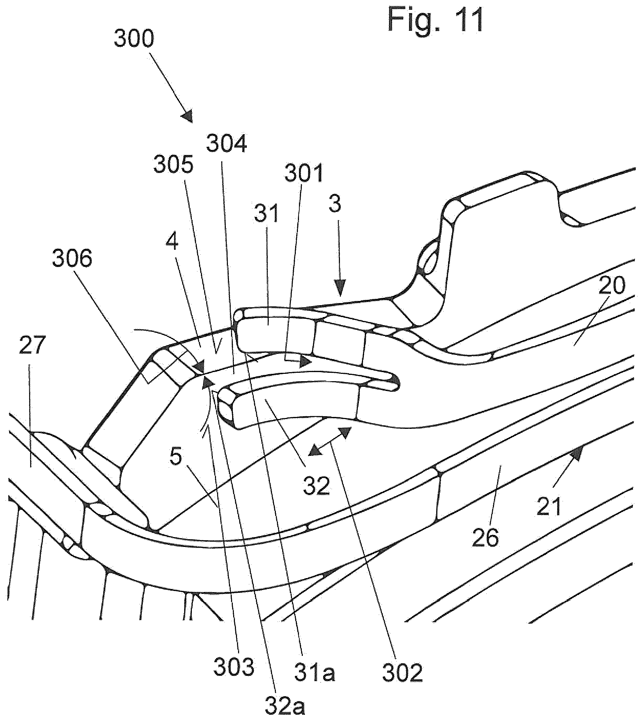

In vergrößerter Darstellung ist dies in der **Figur 11** zu sehen, die weiterhin einen an den Federarm 20 gekrümmt angeformten Andruckschenkel 32 eines Federendes 300 wiedergibt, der an der dem Reibbelag 5 zugewandten Randfläche der Belagträgerplatte 4 anliegt und wie vorgenannt eine Kippsicherung bildet. Überdies wird verhindert, dass der Reibbelag 5 gegen den Federarm 20 schlägt. Dabei bilden der auf einer dem Bremsträger 6 abgewandten Schmalseite der Belagträgerplatte 4 aufliegende Stützschenkel 31 und der Andruckschenkel 32 die Zinken einer Gabel mit einem Schlitz 301 als die das Federende 300 des Federarmes 20 ausgebildet ist. Wie bereits erwähnt, ist das Federende 300 des Federarmes 20 im Anlagebereich mit der Belagträgerplatte 4, also der Andruckschenkel 32 in Richtung der Belagträgerplatte 4 konvex gekrümmt, um so ein behinderungsfreies Gleiten an der Belagträgerplatte 4 zu gewährleisten.

Der Stützschenkel 31 des Federendes 300 liegt mit einem Auflageabschnitt 31a seiner dem Schlitz 301 zugewandten Unterseite auf einer Auflagefläche 305 der Oberseite der Belagträgerplatte 4 auf. Der Andruckschenkel 32 steht mit einem Anlageabschnitt 32a, welcher zu der Belagträgerplatte 4 weist, mit einer Anlagefläche 303 der Belagträgerplatte 4 in Kontakt. Die Anlagefläche 303 befindet sich auf der Seite der Belagträgerplatte 4, auf welcher der Reibbelag 5 aufgebracht ist. Dabei ist die Anlagefläche 303 oberhalb des Reibbelags 5 in einem Endbereich der Belagträgerplatte 4 angeordnet.

Die Auflagefläche 305 auf der Oberseite der Belagträgerplatte 4 kann in einem Winkel 306 zu einer gedachten Horizontalen mit einem Betrag in einem Bereich von beispielsweise 5 bis 15° angeordnet sein.

Die Auflagefläche 305 bildet eine Führung für den Stützschenkel 31 des Federendes 300 des Federarms 20 bei dessen Bewegungen in Bewegungsrichtungen 302 (z.B. aufgrund von Verschleißausgleich) und einen Anschlag für diesen in einer Richtung auf die Oberseite der Belagträgerplatte 4 hin.

Zudem bildet der Kontakt zwischen der Auflagefläche 305 der Belagträgerplatte 4 und dem Stützschenkel 31 des Federendes 300 des Federarms 20 eine Abfederung des Bremsbelags 3 in radialer Richtung. Zudem wird die Belagträgerplatte 4 und somit der Bremsbelag 3 durch diesen Kontakte mit den Stützschenkeln 31 der Federenden 300 nach unten in seinen Belagschacht gedrückt und abgefedert. Wenn die Spreizeinrichtung 8 wie z.B. in Fig. 1a gezeigt durch den Belaghaltebügel 28 fixiert ist, könnten unter Umständen auch die Bremsbeläge 3 ohne Belaghaltefedern 7 ausgeführt sein.

Die Anlagefläche 303 bildet eine Führung für den Andruckschenkel 32 des Federendes 300 des Federarms 20 bei dessen Bewegungen in Bewegungsrichtungen 302 (z.B. bei Verschleißausgleich) und einen Anschlag für diesen in einer Richtung auf die Belagträgerplatte 4 parallel zu einer Bremsscheibendrehachse 2a hin.

In einer nicht gezeigten Ausführung kann die Anlagefläche 303 von der Belagträgerplatte 4 hervorstehen oder in die Belagträgerplatte 4 eingeformt sein, beispielsweise als eine Nut.

Die Anlagefläche 303 und die Auflagefläche 305 können als Führungsflächen mit einer besonderen Oberflächenbearbeitung versehen sein, z.B. geschliffen, um einen geringen Reibwiderstand aufzuweisen.

Es ist zudem möglich, das ein Vorsprung 304 vorgesehen ist, welcher von der Belagträgerplatte 4 derart zu dem Federende 300 in den Schlitz 301 hervorsteht. Auf diese Weise bildet der Vorsprung eine zusätzliche Führung für das Federende 300.

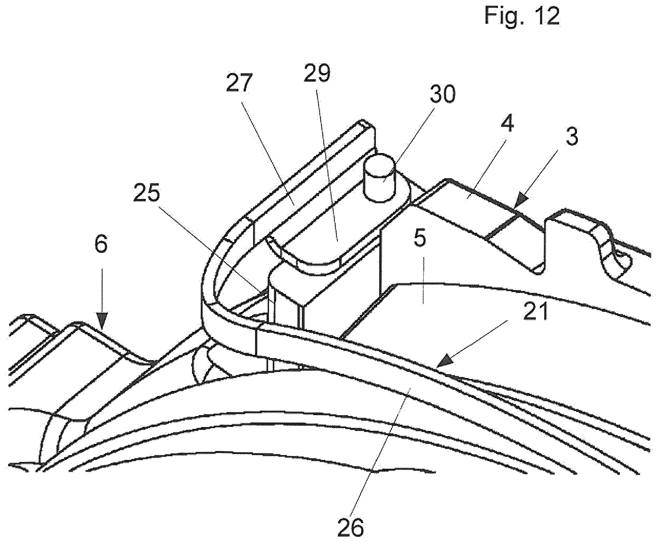

In der **Figur 12** ist ein vergrößerter Ausschnitt des Haltebogens 21 im Anbindungsbereich an dem Bremsträgerhorn 25 abgebildet, wobei die Lasche 29 auf einer planen Stirnseite des Bremsträgerhorns 25 aufliegt. Der Zapfen 30 kann als Niet ausgebildet und in eine Bohrung 25a (siehe Figur 26) des Bremsträgerhorns 25 eingesteckt sein. Es ist auch möglich, dass der Zapfen 30 an dem Bremsträgerhorn 25 angeformt oder als ein separates Bauteil schon vorher fest eingesetzt ist.

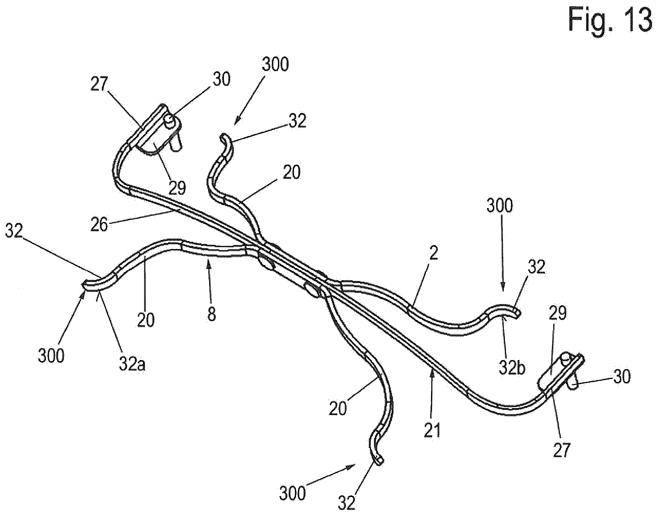

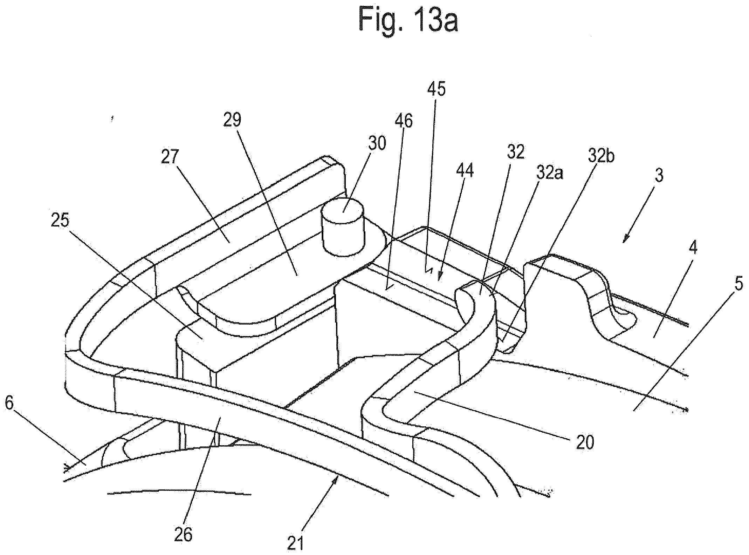

In der **Figur 13** ist die Spreizeinrichtung 8 entsprechend den Figuren 8-13 als Einzelheit erkennbar. An den freien Enden der Federarme 20 sind hier jeweilige Federenden 300 als gebogene Andruckschenkel 32 ausgeführt. Die Andruckschenkel 32 weisen jeweils den in Figur 11 oben schon angegebenen Anlageabschnitt 32a auf. Zudem sind die Andruckschenkel 32 hier an ihren Unterseiten mit einem jeweiligen Auflageabschnitt 32b versehen, der für einen Auflagekontakt wie unten noch erläutert wird mit einer geeigneten Oberflächenbeschaffenheit mit geringem Reibkoeffizienten versehen ist.

In **Figur 13a** ist hierzu eine vergrößerte Teilansicht des Endbereichs einer Belagträgerplatte 4 eines Bremsbelags 3 zusammen mit einem solchen Andruckschenkel 32 gezeigt. Der Bremsbelag 3 ist in seinem Belagschacht zwischen zwei Bremsträgerhörnern 25 eingesetzt, von denen hier nur eins dargestellt ist. An diesem Bremsträgerhorn 25 ist wie oben im Zusammenhang mit Figur 12 beschrieben ein Endschenkel 27 des Haltebogens 21 angebracht.

Der Endbereich der Belagträgerplatte 4 ist hier mit einem Stützabschnitt 44 versehen, welcher in die Belagträgerplatte 4 eingeformt ist, z.B. durch mechanische Bearbeitung. Der Stützabschnitt 44 weist eine Anlagefläche 45 und eine Auflagefläche 46 auf. Durch diese mechanische Bearbeitung kann außerdem die Toleranzlage deutlich verbessert werden. So können die Abstände von Mitte der Bremsscheibe 2 bzw. Mittelschenkel und Angriffsfläche an der Belagträgerplatte 4 / Bremssattel 1 zuspannseitig bzw. druckstückseitig recht konstant gehalten werden.

Die Anlagefläche 45 verläuft parallel zu der Seitenfläche der Belagträgerplatte 4 versetzt, welche mit dem Reibbelag 5 versehen ist, wobei die Anlagefläche 45 von dieser Seitenfläche in Richtung der Bremsscheibendrehachse 2a, also axial, durch eine axiale Tiefe der Auflagefläche 46 beabstandet ist.

Der Andruckschenkel 32 ist in dem Stützabschnitt 44 angeordnet und steht mit seinem Anlageabschnitt 32a mit der Anlagefläche 45 in Kontakt. Gleichzeitig liegt der Andruckschenkel 32 mit seinem Auflageabschnitt 32b auf der Auflagefläche 46 auf. Der Andruckschenkel 32 wird auf diese Weise bei seiner Bewegung durch seinen Kontakt mit dem Stützabschnitt 44 durch diesen geführt. Die Anlagefläche 45 und die Auflagefläche 46 können durch Bearbeitung für diese Bewegung mit besonderen Reibeigenschaften ausgestattet sein.

Zudem wird die Belagträgerplatte 4 und somit der Bremsbelag 3 durch diese Kontakte mit den Andruckschenkeln 32 der Federenden 300 nach unten in seinen Belagschacht gedrückt und abgefedert. Wenn die Spreizeinrichtung 8 wie z.B. in Fig. 1a gezeigt durch den Belaghaltebügel 28 fixiert ist, könnten unter Umständen auch die Bremsbeläge 3 ohne Belaghaltefedern 7 ausgeführt sein.

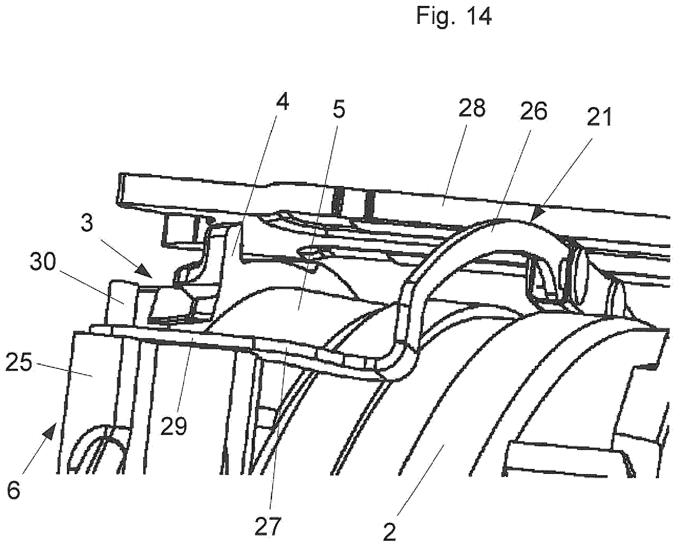

Während die **Figur 14** einen Teilausschnitt des Anbindungsbereiches des Haltebogens 21 am Bremsträgerhorn 25 in vergrößerter Ansicht wiedergibt. Als Kippsicherung ist hierbei ein Rückhalteblech 40 vorgesehen, das am Mittelschenkel 26 befestigt ist und an dem der Belaghaltebügel 28 anliegt.

Im Unterschied zu dem in der Figur 13 gezeigten Ausführungsbeispiel ist die Lasche 29 nicht gegenüber dem Endschenkel 27 abgewinkelt, sondern wird verlaufsgleich durch diesen gebildet, durch entsprechende Formung des Haltebogens 21.

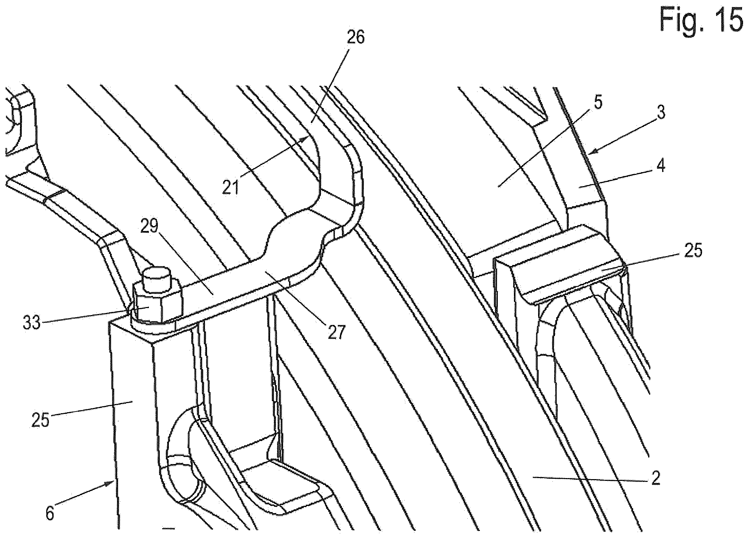

Eine dazu vergleichbare Ausführungsvariante ist in der **Figur 15** dargestellt, bei der allerdings die Sicherung des Endschenkels 27 bzw. der Lasche 29 mittels einer Mutter 33 erfolgt, die auf einem Gewindezapfen des Bremsträgerhorns 25 aufgeschraubt ist und die Lasche 29 am Bremsträgerhorn 25 hält.

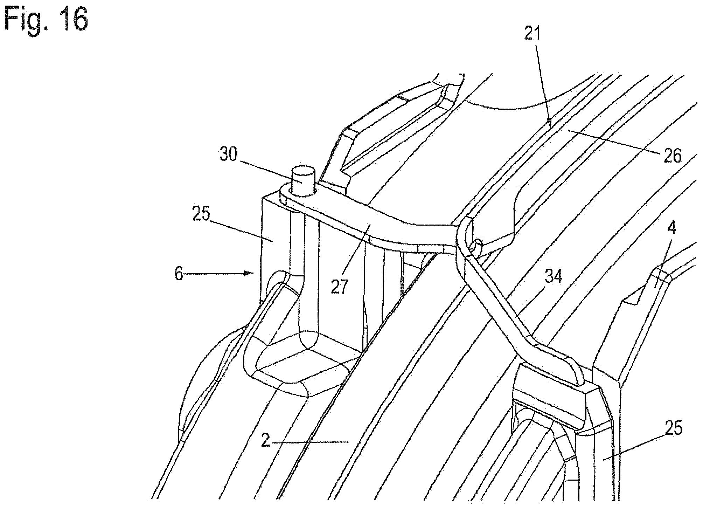

In der **Figur 16** ist entgegengesetzt zum Endschenkel 27 des Haltebogens 21 eine Stützlasche 34 abgewinkelt, die an der Stirnseite des zugeordneten Bremsträgerhorns 25 aufliegt und die, vergleichbar dem Stützschenkel 31 nach Figur 11, eine radiale Sicherung für den Haltebogen 21 und damit für die Spreizeinrichtung 8 bildet.

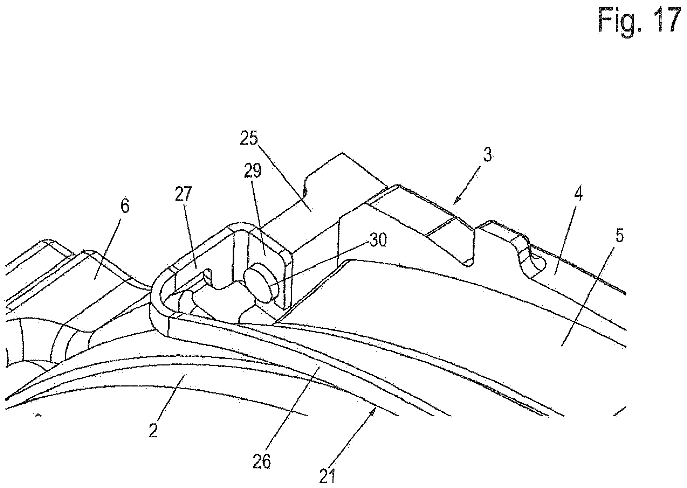

Eine weitere Variante der Befestigung des Haltebogens 21 am Bremsträgerhorn 25 ist in der **Figur 17** erkennbar, die einen vergrößerten Teilausschnitt des entsprechenden Bereiches des Bremsträgers 6 wiedergibt.

Hier nun ist der Endschenkel 27 endseitig etwa parallel zum Mittelschenkel 26 abgewinkelt und auf den im Bremsträgerhorn 25 befestigten Zapfen 30 aufgesteckt.

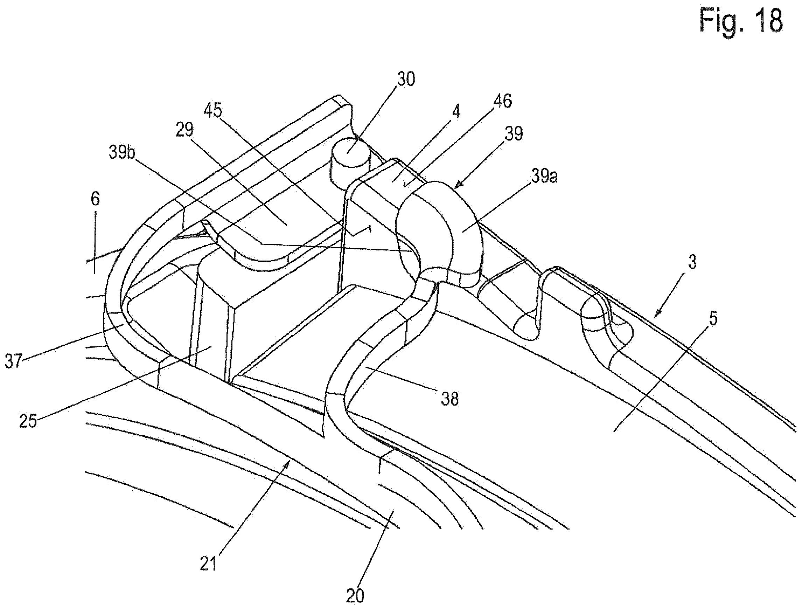

In der **Figur 18** ist eine Ausführungsvariante der Spreizeinrichtung 8 abgebildet, bei der die Federarme 20, von denen der Endabschnitt eines Federarmes 20 dargestellt ist, einerseits die Funktion des Haltebogens 21 übernimmt und andererseits die Funktion des Spreizens.

Hierzu ist der Federarm 20 in seinem Endbereich in Längsrichtung gespalten unter Bildung eines Federstegs 38 und eines Anschlussstegs 37. Dabei übernimmt der mit einer endseitig angeformten Winkellasche 39 versehene Federsteg 38 die Spreizfunktion, d.h. er wird beim bremsbedingten Verschieben des Bremsbelages 3 gegen die Federkraft gespannt und drückt nach dem Lösen der Bremse den Bremsbelag 3 in seine Endstellung, wobei die Winkellasche an der Belagträgerplatte 4 sowohl in Spannrichtung wie auch in radialer Richtung anliegt, also an der oberen Kante der Belagträgerplatte 4.

Die Winkellasche 39 ist ähnlich wie die Ausführung nach Figur 11 in zwei verschiedene Schenkel aufgeteilt und weist einen Stützschenkel 39a und einen rechtwinklig dazu liegenden Andruckschenkel 39b auf. In diesem Beispiel sind der Stützschenkel 39a und der Andruckschenkel 39b jedoch nicht getrennt, sondern zusammen verbunden in Form der Winkellasche 39 ausgebildet. Der Stützschenkel 39a steht in radialer Richtung zur Bremsscheibendrehachse 2a in Kontakt mit der Auflagefläche 46, wobei der Andruckschenkel 39b in axialer Richtung parallel zu der Bremsscheibendrehachse 2a in Kontakt mit der Anlagefläche 45 steht.

Der Anschlusssteg 37 hingegen ist endseitig mit einer einen Zapfen 30 aufweisenden Lasche 29 versehen, wobei der Zapfen 30 in eine Bohrung 25a (siehe Figur 26) des Bremsträgerhorns 25 eingesteckt ist, um, wie beschrieben, eine Zentrierung des Bremssattels 1 nach einem Bremsvorgang zu ermöglichen.

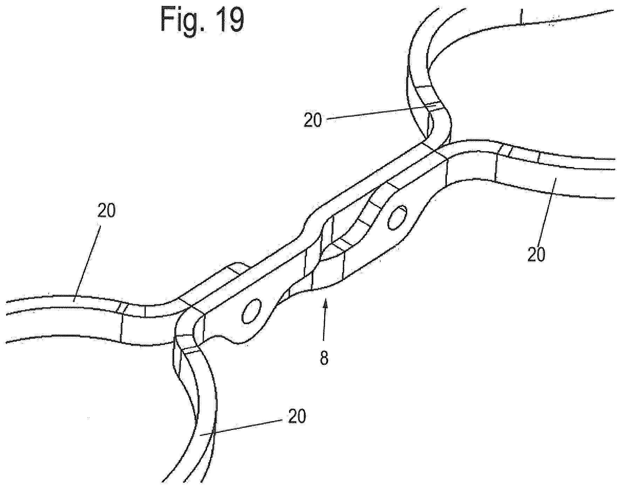

Die **Figur 19** zeigt den Mittenbereich eines weiteren Ausführungsbeispiels der Spreizeinrichtung 8, bei der die Federarme 20 aus zwei sich kreuzenden Einzelfedern gebildet sind, die im Mittenbereich fest miteinander verbunden sind. Dabei liegt ein Federarm 20 der einen Einzelfeder an einer Belagträgerplatte 4 und der andere Federarm dieser Einzelfeder an der anderen, gegenüberliegenden Belagträgerplatte 4 an, gleichermaßen die Federarme 20 der anderen Einzelfeder.

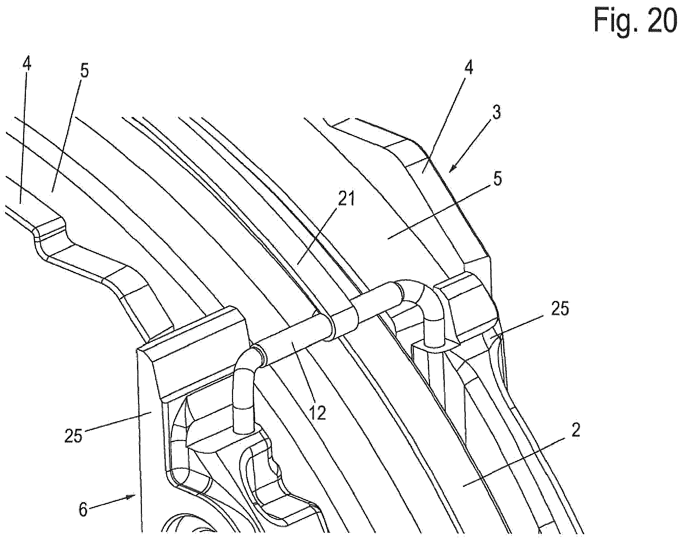

Eine der Figur 5 vergleichbare Befestigung des Bügels 12 ist in der **Figur 20** dargestellt. Allerdings wird hierbei auf die Sicherung 13 zur Halterung des Haltebogens 21 verzichtet. Stattdessen ist der Haltebogen 21 insbesondere durch Reibschluss, denkbar aber auch durch Formschluss, axial gesichert an dem Bügel 12 gehalten. Im Übrigen ist der Bügel 12 in Bohrungen 25a der sich gegenüberliegenden Bremsträgerhörner 25 eingesteckt.

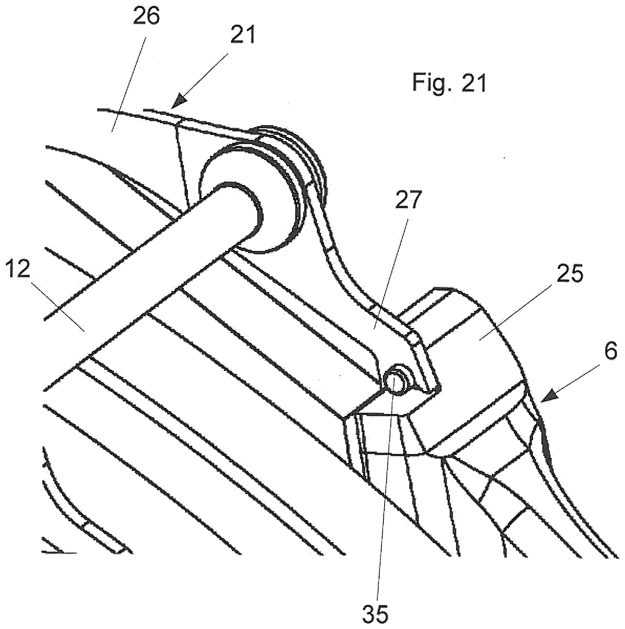

Eine davon verschiedene Konstruktion ist in der **Figur 21** erkennbar, die einen vergrößerten Ausschnitt einer Befestigung des Haltebogens 21 wiedergibt. Dabei ist der Bügel 12 als gestreckte Stange ausgebildet und endseitig an dem Haltebogen 21 befestigt, dessen Endschenkel 27 sich fluchtend an dem Mittelschenkel 26 anschließt, wobei der Endschenkel 27 ein gabelförmiges Ende aufweist, das einen Stift 35 übergreift, der in das Bremsträgerhorn 25 eingelassen ist.

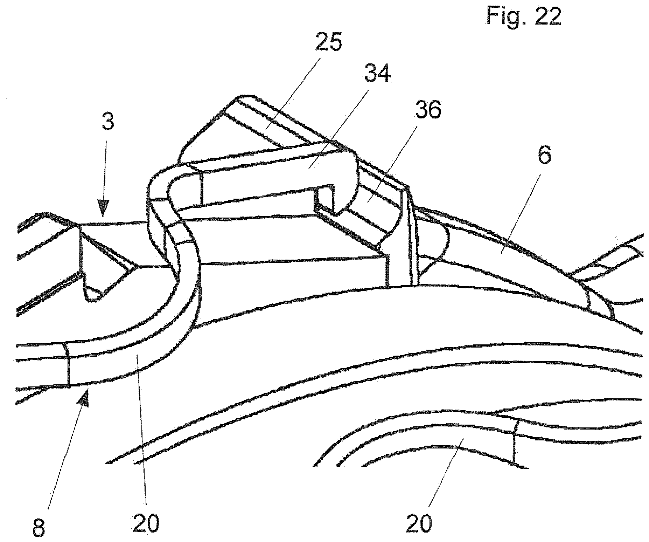

In der **Figur 22****,** gleichfalls ein vergrößerter Teilausschnitt im Bereich eines Bremsträgerhorns 25, ist zu erkennen, dass sich an einen Federarm 20 der Spreizeinrichtung 8 eine Stützlasche 34 anschließt, die an einer Stützfläche 36 des Bremsträgerhorns 25 anliegt und sich einerseits in radialer Richtung zur Bremsscheibe 2 und andererseits in axialer Richtung dazu abstützt.

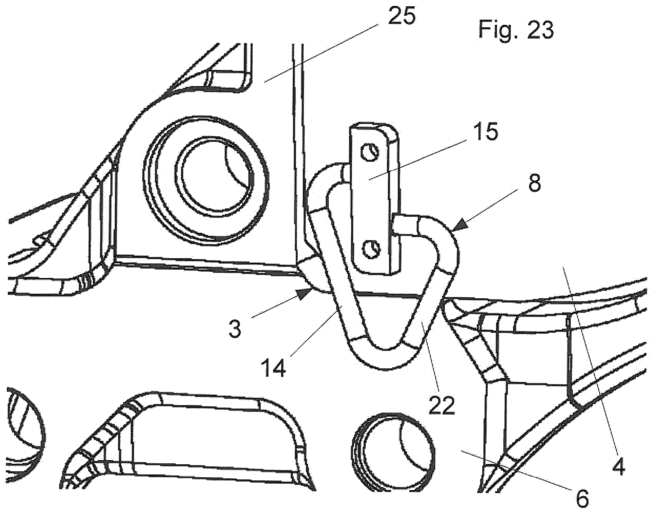

Vergleichbar der Ausführung nach Figur 2 ist in den Figuren **23** **und** **24** jeweils eine Ausführungsvariante der Spreizeinrichtung 8 abgebildet, die aus einem Federbügel 14 und einem Anlageschenkel 22 besteht, die beide endseitig mit jeweils einem Befestigungsende 14a, 22a in die Aufhängung 15 eingesetzt ist, wobei diese an der Belagträgerplatte 4 befestigt ist.

Dabei sind der Federbügel 14 und der Anlageschenkel 22 versetzt zueinander und auf gegenüberliegenden Seiten an der Aufhängung 15 befestigt und stützen sich andererseits am Bremsträger 6 ab und zwar bei dem in der **Figur 23** gezeigten Beispiel unterhalb der Belagträgerplatte 4 und bei dem in der **Figur 24** gezeigten Beispiel am Bremsträgerhorn 25.

Die Aufhängung 15 ist als eine längliche, rechteckige Platte mit zwei Längsseiten 15a, 15b ausgebildet. Hier sind zwei diagonal gegenüberliegende Enden abgerundet. Das Befestigungsende 14a des Federbügels 14 ist auf der in der Figur 24 gezeigten oben liegenden, schmalen Längsseite 15a außermittig rechts mit der Aufhängung 15 verbunden, wohingegen das Befestigungsende 22a des Anlageschenkels 22 an der unten liegenden, anderen schmalen Längsseite 15b außermittig links mit der Aufhängung 15 verbunden ist.

Die anderen Enden des Federbügels 14 und des Anlageschenkels 22 laufen schräg aufeinander zu und sind durch einen Verbindungsbogen 220 fest verbunden.

Die Platte der Aufhängung 15 ist hier mit zwei Befestigungslöchern 15c zur Befestigung, z.B. mittels Schrauben oder Nieten, versehen.

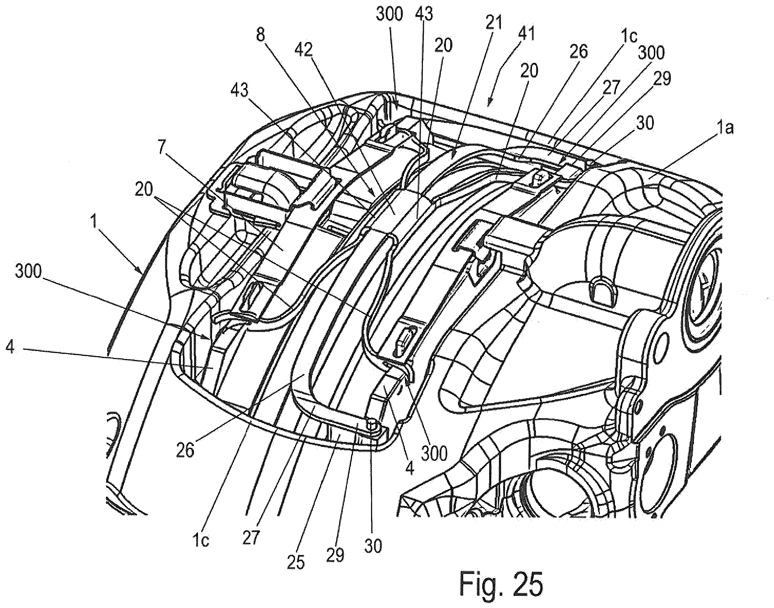

**Figur 25** zeigt ein weiteres Ausführungsbeispiel, welches ähnlich dem in den Figuren 8 bis 11 beschriebenen, jedoch mit einigen Unterschieden, aufgebaut ist.

Der Haltebogen 21 und die Federarme 20 sind hier einstückig, z.B. als ein Stanzbiegeteil, ausgebildet und in einem mittleren Bereich durch einen gemeinsamen Basisabschnitt 42 fest verbunden. Der Basisabschnitt 42 liegt in der virtuellen Mitte der Öffnung 41 und in einer Ebene, die tangential zu der Bremsscheibe 2 verläuft.

Von diesem Basisabschnitt 42 aus erstrecken sich die Mittelschenkel 26 des Haltebogens 21 nach beiden Seiten nach unten gebogen über der Bremsscheibe 2 wie in dem Ausführungsbeispiel nach Figur 4 gezeigt als flache Streifenabschnitte bis kurz vor die Zugstreben 1c, welche die Öffnung 41 seitlich begrenzen. An diesen Stellen sind beide Mittelschenkel 26 zu dem Zuspannabschnitt 1a des Bremssattels 1 hin umgebogen und gehen jeweils in einen Endschenkel 27 über.

Jeder Endschenkel 27 weist die Lasche 29 mit dem Zapfen 30 auf, ähnlich wie in dem Ausführungsbeispiel nach Figur 8, jedoch mit dem Unterschied, dass die Lasche 29 nicht verbreitert ist. Jeder Endschenkel 27 verläuft mit seiner Lasche 29 derart in einer Ebene, dass die Lasche 29 auf dem zugehörigen Bremsträgerhorn 25 aufliegt. Dabei wird der Zapfen 30 in einer Bohrung 25a (ähnlich wie in Figur 26 gezeigt) aufgenommen und an dem Bremsträgerhorn 25 befestigt. Dies gilt natürlich für beide Seiten und für beide Bremsträgerhörner 25.

Ferner weist der Basisabschnitt 42 an seinen beiden Längsseiten jeweils einen um ca. 90° nach unten zur Bremsscheibe 2 hin umgebogenen Verbindungsabschnitt 43 auf. Jeder Verbindungsabschnitt 43 verbindet auf jeder Längsseite des Basisabschnitts 42 jeweils zwei Federarme 20 mit dem Basisabschnitt 42 parallel zu der gedachten Längsmittellinie der Öffnung 41 derart, dass sich eine Anordnung ähnlich wie in Figur 8 ergibt. Dabei liegt jeder Verbindungsabschnitt 43 in einer jeweiligen Ebene, die um etwa 90° zu der Ebene des Basisabschnitts 42 angeordnet ist und im Wesentlichen parallel zu der Ebene der Bremsscheibe 2 verläuft.

Die Federenden 300 der Federarme 20 sind wie in dem Ausführungsbeispiel nach Figur 8 und in der Figur 11 dargestellt und beschrieben ausgebildet. In **Figur 26** ist ein weiteres Ausführungsbeispiel dargestellt, bei welchem der Haltebogen 21 drahtförmig ausgebildet ist und z.B. einen kreisrunden Querschnitt aufweist.

Der Haltebogen 21 umfasst einen Zentralabschnitt 26a in einem mittleren Bereich der Öffnung 41. An den Zentralabschnitt 26a schließt auf jeder Seite ein Mittelabschnitt 26 an, der jeweils in einem Bogen in Richtung zu dem Zuspannabschnitt 1a hin durch einen Endschenkel 27 auf das jeweilige Bremsträgerhorn 25 zuläuft. Jeder Endschenkel 27 ist dann nach unten hin um ca. 90° in jeweils einen Befestigungsabschnitt 27a umgebogen. Jeder Befestigungsabschnitt 27a ist in einer Bohrung 25a eines jeden Bremsträgerhorns 25 des Belagschachtes des aktionsseitigen Bremsbelags 3 befestigt und bildet damit die Halterung des Haltebogens 21 mit der Spreizeinrichtung 8 in dem Bremsträger 6.

Die Federarme 20 sind hier nicht in Längsrichtung der Öffnung 41, sondern in Querrichtung der Öffnung 41 jeweils paarweise durch einen Verbindungsabschnitt 200 verbunden. Jeder Verbindungsabschnitt 200 ist in radialer Richtung auf die Bremsscheibendrehachse 2a nach unten hin verbreitert und weist eine Ausnehmung 201 auf. Jede Ausnehmung 201 kommuniziert mit der Außenkontur des Haltebogens 21 und weist hier einen halbkreisförmigen Querschnitt auf, der nach oben zur Aufnahme des Haltebogens 21 offen ist. Die Verbindungsabschnitt 200 der so paarweise angeordneten Federarme 20 sind in einem Abstand 203 an dem Zentralabschnitt 26a des Haltebogens 21 angeordnet, wobei die Mitte des Zentralabschnitts 26a der virtuellen Mitte der Öffnung 41 zugeordnet ist und die Mitte des Abstands 203 bildet. Ein Maß des Abstands 203 entspricht hier etwa einem Viertel der Längsausdehnung der Öffnung 41. Das Maß des Abstands 203 kann beispielsweise in einem Bereich von 30 bis 50% der Längenausdehnung der Öffnung 41 entweder symmetrisch zu der virtuellen Mitte der Öffnung 41 oder ohne Bezug auf die virtuelle Mitte der Öffnung 41 liegen. Die Federarme 20 können mit dem Haltebogen 21 z.B. durch Schweißen, Verpressen oder beides verbunden sein.

Die Federarme 20 und ihre Verbindungsabschnitte 200 sind z.B. einstückig als Stanzbiegeteile aus Bandfederstahl ausgebildet.

In dem Ausführungsbeispiel der **Figur 27** ist der Haltebogen 21 wie in der Ausführung nach Figur 26 gestaltet. Hier sind jedoch die paarweise in Querrichtung der Öffnung 41 angeordneten Federarme 20 einschließlich ihrer Verbindungsabschnitte 200 drahtförmig ausgebildet. Die Verbindungsabschnitte 200 sind so gebogen, dass sie Aufnahmen für den Haltebogen 21 bilden. Nach oben hin sind die Federarme 20 jeweils durch den Haltebogen 21 fixiert, der wiederum durch den Belaghaltebügel 28 nach unten gedrückt wird. Mit steigendem Belagverschleiß bewegen sich die Verbindungsabschnitte 200 in Richtung Mitte aufeinander zu.

Die Enden der Federarme 20 sind jeweils als ein nach unten gebogener Befestigungsabschnitt 20a ausgebildet. Jeder Befestigungsabschnitt 20a ist in einem Aufnahmeloch 4a an einem jeden Endbereich einer Belagträgerplatte 4 von der Oberseite her aufgenommen. Die Spreizeinrichtung 8 überträgt ihre Spreizkräfte auf diese Weise zwischen jedem Befestigungsabschnitt 20a in dem zugehörigen Aufnahmeloch 4a auf die jeweiligen Belagträgerplatten 4.

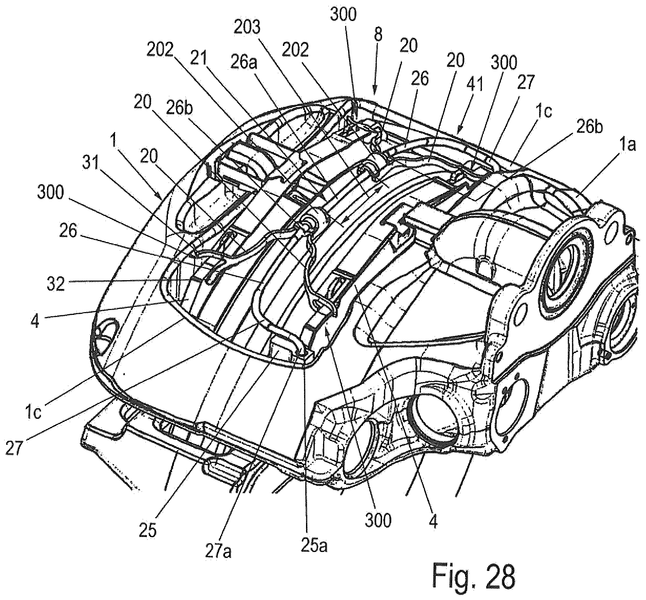

**Figur 28** zeigt ein Ausführungsbeispiel, bei welchem der Haltebogen 21 wie in den Ausführungen nach Figur 26 und 27 C-förmig ausgebildet ist. Die Federarme 20 weisen Federenden 300 gemäß Figur 11 auf. Zudem sind die Federarme 20 paarweise in Querrichtung der Öffnung 41 angeordnet. Jedes Paar von Federarmen 20 ist an deren anderen Enden durch einen jeweiligen Haubenverbinder 202 verbunden.

Jeder Haubenverbinder 202 weist eine nach unten zur Bremsscheibe 2 hin weisende Aufnahmeöffnung in Längsrichtung des Zentralabschnitts 26a des Haltebogens 21 auf, die mit der Außenkontur des Zentralabschnitts 26a des Haltebogens 21 kommuniziert.

Die paarweise mit jeweils einem Haubenverbinder 202 verbundenen Federarme 20 sind mit ihrem jeweiligen Haubenverbinder 202 auf den Zentralabschnitt 26a angeordnet. Um die beiden Federarme 20 bzw. Spreizelemente auf dem Haltebogen 21 zu fixieren, sind jeweils zwei Schellen eingebracht, die aus Halbschalen bestehen und versetzt zueinander die Spreizelemente mit dem Haltebogen 21 verklemmen. Um den Abstand 203 zu gewährleisten, sind zusätzlich noch Schweißpunkte zwischen den Bauteilen gesetzt. Zusätzlich dienen Schellen als Abstandshalter zwischen dem Haltebogen 21 und Federarmen 20. Dieser ist in der Ausführung nach Figur 28 erforderlich, da der gehärtete Federarm 20 nicht mit so einem kleinen Radius auf den Haltebogen 21 gelegt werden kann.

Die Erfindung wird durch die oben beschriebenen Ausführungsbeispiele nicht eingeschränkt. Sie ist im Rahmen des beigefügten Anspruchs modifizierbar.

### BEZUGSZEICHENLISTE

- 1: Bremssattel
- 1a: Zuspannabschnitt
- 1b: Sattelrücken
- 1c: Zugstrebe
- 1d: Befestigungsabschnitt
- 1e: Bodenblech
- 2: Bremsscheibe
- 2a: Bremsscheibendrehachse
- 3: Bremsbelag
- 4: Belagträgerplatte
- 4a: Aufnahmeloch
- 4b: Belagseite
- 4c: Auflagefläche
- 4d, 4e: Seitenfläche
- 4f: Druckseite
- 5: Reibbelag
- 6: Bremsträger
- 7: Belaghaltefeder
- 7a: Klammerelement
- 8: Spreizeinrichtung
- 9: Bandfeder
- 10: Schlitz
- 11: Lasche
- 11a: Druckabschnitt
- 12: Bügel
- 13: Sicherung
- 14: Federbügel
- 14a: Befestigungsende
- 15: Aufhängung
- 15a, 15b: Längsseite
- 15c: Befestigungsloch
- 16: Scherenglied
- 17: Blattfeder
- 18: Federschenkel
- 19: Anlage
- 20: Federarm
- 20a: Befestigungsabschnitt
- 20b: Verbindungsabschnitt
- 21: Haltebogen
- 22: Anlageschenkel
- 22a: Befestigungsende
- 23: Dom
- 24: Anlagebügel
- 25: Bremsträgerhorn
- 25a: Bohrung
- 26: Mittelschenkel
- 26a: Zentralabschnitt
- 26b: Verbreiterung
- 26c: Sicherungselement
- 26d: Nut
- 27: Endschenkel
- 27a: Befestigungsabschnitt
- 28: Belaghaltebügel
- 29: Lasche
- 30: Zapfen
- 31: Stützschenkel
- 31a: Auflageabschnitt
- 32: Andruckschenkel
- 32a: Anlageabschnitt
- 32b: Auflageabschnitt
- 32c: Führungsöffnung
- 32d: Anlageabschnitt
- 33: Mutter
- 34: Stützlasche
- 35: Stift
- 36: Stützfläche
- 37: Anschlusssteg
- 38: Federsteg
- 39: Winkellasche
- 39a: Stützschenkel
- 39b: Andruckschenkel
- 40: Rückhalteblech
- 41: Öffnung
- 42: Basisabschnitt
- 43: Verbindungsabschnitt
- 44: Stützabschnitt
- 45: Anlagefläche
- 46: Auflagefläche
- 47: Stift
- 48: Langloch
- 49: Vorsprung
- 100: Scheibenbremse
- 150: Verbindung
- 151, 152: Lager
- 200: Verbindungsabschnitt
- 201: Ausnehmung
- 202: Haubenverbinder
- 203: Abstand
- 220: Verbindungsbogen
- 300: Federende
- 301: Schlitz
- 302: Bewegungsrichtung
- 303: Anlagefläche
- 304: Vorsprung
- 305: Auflagefläche
- 306: Winkel

## Patentansprüche

1. Scheibenbremse (100) für ein Nutzfahrzeug, mit einem eine Bremsscheibe (2) übergreifenden, als Schiebesattel ausgebildeten Bremssattel (1), der an einem ortsfesten Bremsträger (6) befestigt ist und eine zentrale Öffnung (41) über der Bremsscheibe (2) aufweist, zwei im Bremssattel (1) angeordneten, gegensinnig bewegbaren, jeweils eine Belagträgerplatte (4) und einen darauf befestigten Reibbelag (5) aufweisenden Bremsbelägen (3), von denen ein aktionsseitiger bzw. zuspannseitiger Bremsbelag (3) mittels einer Zuspanneinrichtung über mindestens einen Bremsstempel gegen die Bremsscheibe (2) pressbar ist, wobei die Bremsbeläge (3) durch die zentrale Öffnung (41) in zugehörigen Belagschächte eingesetzt und wieder daraus entnommen werden können, sowie mindestens einer Rückstelleinrichtung, mit der der Bremssattel (1) nach einem bremsbedingten Verschieben und Lösen der Bremse rückführbar ist, wobei die Rückstelleinrichtung einer an den sich gegenüberliegenden Bremsbelägen (3) gleich wirkend angreifenden, entgegen der jeweiligen Zuspannrichtung wirkenden Spreizeinrichtung (8) mit an der jeweiligen Belagträgerplatte (4) angreifenden federnden Spreizelementen aufweist, die als vier Federarme (20) ausgebildet sind, wobei die Spreizeinrichtung (8) in der zentralen Öffnung (41) angeordnet ist, wobei die Federarme (20) drahtförmig ausgebildet sind, wobei
- die Federarme (20) mit einem Haltebogen (21) verbunden sind, der am Bremsträger (6) angebracht ist,
- wobei die Federarme Enden (20) aufweisen, welche jeweils als ein nach unten gebogener Befestigungsabschnitt (20a) ausgebildet sind, wobei jeder Befestigungsabschnitt (20a) in einem Aufnahmeloch (4a) an einem jeden Endbereich einer Belagträgerplatte (4) von der Oberseite her aufgenommen ist, so dass die Spreizeinrichtung (8) ihre Spreizkräfte auf diese Weise zwischen jedem Befestigungsabschnitt (20a) in dem zugehörigen Aufnahmeloch (4a) auf die jeweiligen Belagträgerplatten (4) überträgt, **dadurch gekennzeichnet, dass** der Haltebogen (21) an die zwei Bremsträgerhörner von einem der Belagschächte angeschlossen ist,
- der Haltebogen (21) drahtförmig ist und in seiner Kontur C-förmig ausgebildet ist,
- der Haltebogen (21) einen Zentralabschnitt (26a) in einem mittleren Bereich der Öffnung (41) umfasst, wobei sich an den Zentralabschnitt (26a) auf jeder Seite ein Mittelabschnitt (26) anschließt, der jeweils in einem Bogen in Richtung zu dem Zuspannabschnitt (1a) hin durch einen Endschenkel (27) auf das jeweilige Bremsträgerhorn (25) zuläuft, wobei jeder Endschenkel (27) nach unten hin um ca. 90° in jeweils einen Befestigungsabschnitt (27a) umgebogen ist und wobei jeder Befestigungsabschnitt (27a) in einer Bohrung (25a) eines jeden Bremsträgerhorns (25) des Belagschachtes des aktionsseitigen Bremsbelags (3) befestigt ist und damit die Halterung des Haltebogens (21) mit der Spreizeinrichtung (8) in dem Bremsträger (6) ausbildet.

## Claims

1. Disc brake (100) for a utility vehicle having a brake calliper (1), which straddles a brake disc (2), takes the form of a sliding calliper, is fastened to a positionally static brake carrier (6) and has a central opening (41) over the brake disc (2); two brake pads (3), which are arranged in the brake calliper (1), are able to move in opposite directions and each have a pad-carrier plate (4) to which is fastened a friction pad (5), it being possible to press an action- or application-side brake pad (3) against the brake disc (2) by means of an application device via at least one brake plunger, wherein the brake pads (3) can be introduced through the central opening (41) into associated pad shafts and removed back out therefrom; and at least one resetting device by means of which the brake calliper (1) can be reset following the displacement and release of the brake due to braking, this resetting device having a spreading device (8) that engages with the opposing brake pads (3), acts the same manner against the corresponding direction of application and has resilient spreading elements, which are designed as four spring arms (20) that engage with the corresponding pad-carrier plate (4), the spreading device (8) being arranged in the central opening (41), wherein the spring arms (20) are designed in a wire-like manner, wherein the spring arms (20) are connected using a retaining tie (21) which is mounted on the brake carrier,
- wherein the spring arms have ends (20) which are in each case designed as a fastening portion (20a) bent downwards, wherein each fastening portion (20a) is received in a receiving hole (4a) of each single end region of a pad-carrier plate (4) from the top, such that the spreading device (8) transfers its spreading forces in this manner between each fastening portion (20a) in the associated receiving hole (4a) onto the respective pad-carrier plates (4), **characterised in that** the retaining tie (21) is attached to the two brake carrier horns of one of the pad shafts,
- the retaining tie (21) is wire-like and is designed in a C-shaped contour,
- the retaining tie (21) comprises a central portion (26a) in a central region of the opening (41), wherein a middle portion (26) adjoins on the central portion (26a) on each side which runs respectively in an arc in the direction of the application section (1a) through an end leg (27) to the respective brake carrier horn (25), wherein each end leg (27) is bent downwards by approximately 90° to in each case one fastening portion (27a) and wherein each fastening portion (27a) is fastened in a hole (25a) of each single brake carrier horn (25) of the pad shaft of the action-side brake pad (3) and therewith forms the holder for the holding arc (21) with the spreading device (8) in the brake carrier (6).

## Revendications

1. Frein (100) à disque d'un véhicule utilitaire, comprenant un étrier (1) de frein constitué en étrier coulissant, qui chevauche un disque (2) de frein, qui est fixé à un support (6) de frein fixe et qui a une ouverture (41) centrale au-dessus du disque (2) de frein, deux garnitures (3) de frein montées dans l'étrier (1) de frein, mobiles en sens contraire, ayant chacune un flasque (4) de support de garniture et une garniture (5) de friction, qui y est fixée, dont une garniture (3) de frein, du côté de l'action ou du côté du serrage, peut, au moyen d'un dispositif de serrage, par l'intermédiaire d'au moins un piston de frein, être pressée sur le disque (2) de frein, les garnitures (3) de frein pouvant être insérées dans des puits de garniture correspondants à travers l'ouverture (41) centrale et en être retirées, ainsi qu'au moins un dispositif de rappel, par lequel l'étrier (1) de frein peut, après un déplacement provoqué par un freinage et desserrage du frein, être rappelé, le dispositif de rappel ayant un dispositif (8) d'écartement attaquant les garnitures (3) de frein opposées, agissant pareillement à l'encontre du sens de serrage respectif et ayant des éléments d'écartement à ressort attaquant le flasque (4) de support de garniture respectif, qui sont constitués comme quatre bras (20) de ressort, le dispositif (8) d'écartement étant disposé dans l'ouverture (41) centrale, les bras (20) de ressort étant constitués sous forme de fil, les bras (20) de ressort étant reliés à un arceau (21) de maintien, qui est monté sur le support (6) de frein,
- les bras (20) de ressort présentant des extrémités qui sont constituées chacune sous la forme d'un tronçon (20a) de fixation coudé vers le bas, chaque tronçon (20a) de fixation étant reçu, à partir du côté supérieur dans un trou (4a) de réception à une partie d'extrémité d'un flasque (4) de support de garniture, de sorte que le dispositif (8) d'écartement transmet ainsi ses forces d'écartement entre chaque tronçon (20a) de fixation dans le trou (4a) de réception associé aux flasques (4) de support de garniture respectifs, **caractérisé en ce que** l'arceau (21) de maintien est relié aux deux cornes de support de frein d'un des puits de garniture,
- l'arceau (21) de maintien est constitué sous forme de fil et son contour en forme de C,
- l'arceau (21) de maintien comprend un tronçon (26a) central dans une zone centrale de l'ouverture (41), un tronçon (26) médian étant relié au tronçon (26a) central de chaque côté, qui s'étend respectivement en un arc en direction du tronçon (1a) de serrage par une branche d'extrémité (27) sur la corne de support de frein (25) respective, chaque branche d'extrémité (27) étant inclinée vers le bas d'env. 90° en un tronçon (27a) de fixation respectif et chaque tronçon (27a) de fixation étant fixé dans un alésage 5a) de chaque corne (25) de support de frein du puits de garniture de la garniture (3) de frein du côté de l'action et forme ainsi la fixation de l'arceau (21) de maintien avec le dispositif (8) d'écartement dans le support (6) de frein.
